# EUROPEAN PATENT SPECIFICATION

(11) **EP 1 705 229 B1**
(45) Date of publication and mention of the grant of the patent: **22.10.2008**
(21) Application number: 06005983.9
(22) Date of filing: 23.03.2006
(51) Int. Cl.: C09D 11/00, C09D 11/10, B41C 1/10

(54) **Ink composition**
Tintenzusammensetzung
Composition d'encre

(30) Priority: 25.03.2005 JP 2005089068
(43) Date of publication of application: 27.09.2006
(73) Proprietor: FUJIFILM Corporation, Minato-ku Tokyo (JP)
(72) Inventor: Sugai, Masaharu Fuji Photo Film Co., Ltd., Haibara-gun Shizuoka (JP); Aoai, Toshiaki Fuji Photo Film Co., Ltd., Haibara-gun Shizuoka (JP)
(74) Representative: HOFFMANN EITLE

(56) References cited:
- US-A- 5 889 084
- US-A1- 2004 244 641

## Description

### FIELD OF THE INVENTION

The present invention relates to an ink composition, particularly a radiation-curing type ink composition for use in inkjet recording, which is highly sensitive and has a good adhesion to substrates to result in a formation of high quality image excellent storage stability, and to a method for inkjet recording and a printed matter using it. The present invention also relates to a lithographic printing plate which doesn't need a development process and which has a good printing durability, as well as which can form a high quality image and to a method for making such plate.

### BACKGROUND OF THE INVENTION

There are a variety of methods for recording an image to form an image onto a recording medium such as paper based on the image data signal. Examples of the method include an electro photographic method, a dye sublimation and thermal wax transfer method, an inkjet method and the like. The electro photographic method needs a process where an electrostatic latent image is formed on a photoreceptor drum by electrification and exposure. But such steps make the method complex, and the method has the problem of high manufacturing cost, etc. Moreover, as for the thermal wax transfer method, a device used for the method is not so expensive, but it has problems such as high running cost, emitting wastes and the like because an ink ribbon is used. On the other hand, as for the inkjet method, its device is cheap, and it can efficiently use ink because ink is exhaled only in an image part to be formed and it forms an image directly on a recording medium, so that the running cost is low. In addition, the method can be conducted with a low noise level, and thus it is excellent as an image recording method.

An ink composition for use in inkjet recording curable by irradiation of radiant ray such as ultraviolet ray (a radiation-curing type ink composition) which may provide a sufficiently high sensitivity and high quality image is required. An increased curability of an ink composition may be obtained by attaining an improved sensitivity, and then may result in a number of advantages such as decreased electricity consumption, increased lifetime due to the decreased load to a radiation generator, prevention of the generation of low molecular weight compounds though insufficient curing and the like. In addition, particularly when the ink composition for use in inkjet recording described above is used as an image portion of a lithographic printing plate, attaining an improved sensitivity may result in improvement of curing intensity of the image portion, and then a high printing durability can be obtained.

In addition, an ink composition for use in inkjet recording is required to have high storage stability because it appears on the market in itself and it is kept under various conditions.

An ultraviolet-curing type inkjet method has been a focus of to attention recently since it has comparatively low odor and it is possible to record onto a recording medium which is quick-drying and has no ink absorptivity.

However, an ink composition used for the conventional ultraviolet-curing type inkjet method has a problem of shrinking easily. Especially, shrinkage of the well-known ink composition still happens easily in a membrane plastic film or in a pressure sensitive adhesive label used in the flexible packaging including the food packaging, and not having been developed yet is a current state in ink that has enough adhesion for all substrates.

For example, the Japanese Un-examined Patent Publication (hereunder referred to as "J.P. KOKAI") No. 2003-192943 proposes a composition which comprises a polymerizable compound consisting of a certain acrylate compound group, whose object is providing an ink for use in inkjet recording which can record an image that has no blot, high sensitivity and high adhesion to a recording medium, as well as that is safety with little skin stimulation and sensitization, even onto a substrate that is usually difficult to be recorded directly by the inkjet recording method. However, its adhesion to the substrate is not sufficient, and its printing durability when it is used as a lithographic printing plate is also inferior. Moreover, the storage stability as the ink composition is lacked.

Moreover, although an ultraviolet-curing resin composition using a cationically polymerizable material which is excellent in coating aptitude as an overcoating agent for an optical disk has been reported (see J.P. KOKAI No. Hei 9-183928), its adhesion remains to be insufficient. Moreover, the adhesion to a substrate such as aluminum, etc. is also low, and its printing durability is low when used in a lithographic printing plate.

### SUMMARY OF THE INVENTION

Therefore, the purpose of the present invention is to provide an ink composition, particularly an ink composition for use in inkjet recording, which is highly sensitive and has a good adhesion to substrates to result in a formation of high quality image as well as excellent storage stability, and to a method for inkjet recording and a printed matter using the composition.

Moreover, the purpose of the present invention is to provide a lithographic printing plate which is highly sensitive and has a good adhesion to a recording medium to result in a formation of high quality image, and to a method for making the lithographic printing plate.

The above-mentioned problems are solved by an ink composition, comprising:
(a) a cationically polymerizable compound, (b) a compound generating an acid by irradiation; and (c) a plasticizer which is at least one compound selected from a phosphate ester, a dicarboxylic acid ester and a tricarboxylic acid ester; wherein the mass ratio of (a) to (b) is 2011-1:5; the phosphate ester is represented by the following formula (1): 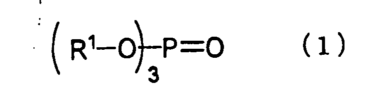
wherein each R¹ independently represents an alkyl group, a cycloalkyl group, an alkenyl group or an aryl group, each of which may be substituted with a halogen atom, a hydroxyl group, a C₁-C₄₀ alkoxy group, a cyano group, a C₆-C₁₀aryloxy group, a C₁-C₄₀ alkyl group, a C₁-C₄₀ alkenyl group, a C₂-C₄₂ alkoxycarbonyl group or a group represented by the formula (R²O)₃PO-O-, wherein each R² independently represents an alkyl group, a cycloalkyl group, an alkenyl group or an aryl group, each of which may be substituted with a halogen atom, a hydroxyl group, an alkoxy group, a cyano group, an aryloxy group, an alkyl group, an akenyl group or an alkoxycarbonyl group;
the dicarboxylic acid ester is represented by the following formula (2):

R³OOC-L¹-COOR⁴ (2)

wherein L¹ represents a divalent substituted or unsubstituted aliphatic hydrocarbon group, a divalent substituted or unsubstituted alicyclic hydrocarbon group, or a divalent substituted or unsubstituted aromatic hydrocarbon group, and R³ and R⁴ each independently represents a substituted or unsubstituted aliphatic hydrocarbon group, a substituted or unsubstituted alicyclic hydrocarbon group, or a substituted or unsubstitutd aromatic hydrocarbon group; and the tricarboxylic acid ester is represented by the following formula (3): 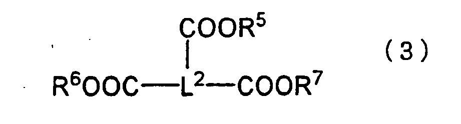 wherein L² represents a trivalent substituted or unsubstituted aliphatic hydrocarbon group, a trivalent substituted or unsubstituted alicyclic hydrocarbon group, or a trivalent substituted or unsubstituted aromatic hydrocarbon group, and R⁵, R⁶, and R⁷ each independently represents a substituted or unsubstituted aliphatic hydrocarbon group, a substituted or unsubstituted alicyclic hydrocarbon group, or a substituted or unsubstituted aromatic hydrocarbon group.

Said ink composition preferably comprises further (d) a colorant. Moreover, (d) the colorant is preferably a pigment or an oil soluble dye.

In a preferred embodiment according to the present invention, said ink composition is an ink composition for use in inkjet recording.

Further, the present invention provides a method for inkjet recording, comprising:
ejecting said ink composition onto a recording medium; and irradiating said ink composition with radiant ray to cure.

The present invention also provides a printed matter wherein said printed matter is formed by ejecting said ink composition onto a recording medium, followed by irradiation of radiant ray to cure the ink composition.

The present invention also provides a method for making a lithographic printing plate, characterized in that a hydrophobic area is formed by ejecting said ink onto a hydrophilic substrate, followed by irradiation of radiant ray to cure the ink composition.

The present invention also provides a lithographic printing plate, wherein said lithographic plate has a hydrophobic area formed by ejecting said ink composition onto a hydrophilic substrate, followed by irradiation of radiant ray to cure the ink composition.

### EFECT OF THE INVENTION

The ink composition according to the present invention is especially excellent in the adhesion to a support material, a substrate and the like. The following reasons can be considered.

Although a cationically polymerizable ink composition is proposed because of its lower shrinkage factor, especially, shrinkage of the ink composition still happens easily in a membrane plastic film, a pressure sensitive adhesive label and the like used in flexible packaging including the food packaging, and an ink composition that has enough adhesion for all substrates has not been developed yet as of today. It is considered that the surface tensity of the ink decreases, the cured film becomes smoother to improve the wetting to the substrate, and then results in the improvement of its adhesion to the substrate by the ink composition according to the present invention, comprising: (a) a cationically polymerizable compound; (b) a compound generating an acid by irradiation of radiant ray; and (c) a plasticizer.

### BEST MODE FOR CARRYING OUT THE INVENTION

### 1. Ink Composition

The ink composition according to the present invention is an ink composition, comprising: (a) a cationically polymerizable compound; (b) a compound generating an acid by irradiation of radiant ray; and (c) a plasticizer. Each component of the ink composition of this invention is described.

### (1-1) Plasticizer

The ester compound possesses a polar portion (an ester bonding part) and a non-polar part (for example, a chain alkyl portion), and it is believed that such structure enters the polymer intermolecular to pull the intermolecular distance apart, and then to give softness to the polymer.

The ester compound used as the plasticizer of the ink composition of the present invention is at least one compound selected from the group consisting of (i) phosphate ester, (ii) dicarboxylic acid ester, and (iii) tricarboxylic acid ester. In the present specification, "phosphate ester" "dicarboxylic acid ester", or "tricarboxylic acid ester" means a compound containing phosphate ester structure, dicarboxylic acid ester structure or tricarboxylic acid ester structure in its molecule.

### (i) Phosphate Ester

The phosphate ester is represented by the general formula (1): 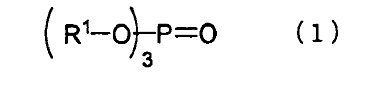 wherein R¹ represents alkyl group, cycloalkyl group, alkenyl group, or aryl group, which may be further substituted by halogen atom (chlorine, bromine, fluorine atom and the like), hydroxyl group, alkoxy group (1 to 40, but preferably 1 to 20 carbon atoms), cyano group, aryloxy group (6 to 10 carbon atoms), alkyl group (1 to 40, but preferably 1 to 20 carbon atoms), alkenyl group (1 to 40 carbon atoms), alkoxycarbonyl (2 to 42 carbon atoms) or (R²O)₂PO-O-. Each of R¹ may be the same or different with each other. R² represents alkyl group, cycloalkyl group, alkenyl group or aryl group, which may be further substituted by halogen atom, hydroxyl group, alkoxy group, cyano group, aryloxy group, alkyl group, alkenyl group or alkoxycarbonyl, and each of R² may be the same or different with each other.

The compounds represented by the general formula (1) described above that may be used for the present invention are described below in more detail.

In the foregoing general formula (1), a compound wherein R¹ is an alkyl group with 1 to 40 (preferably 1 to 20) carbon atoms; a cycloalkyl group with 5 to 40 (preferably 5 to 20) carbon atoms; an alkenyl group with 1 to 40 (preferably 1 to 20); an alkoxyalkyl group with 3 to 60 (preferably 3 to 40) is used in a preferred embodiment.

Preferred examples of alkyl group with 1 to 20 carbon atoms represented by R¹ include methyl group, ethyl group, propyl group, isopropyl group, butyl group, isobutyl group, pentyl group, hexyl group, 2-ethylbutyl group, isoheptyl group, tetradecyl group, hexadecyl group, isooctadecyl group. Preferred examples of cycloalkyl group with 5 to 20 carbon atoms represented by R¹ include cyclopentyl group, 4-t-butylcyclohexyl group, cycloheptyl group, cyclooctyl group, cyclodecyl group, cyclododecyl group and the like. Preferred examples of alkenyl group with 1 to 20 carbon atoms represented by R¹ include allyl group (-CH₂CH=CH₂), methacryl group, 9-decene-1-yl group, oleyl group and the like. Preferred examples of alkoxyalkyl group with 3 to 40 carbon atoms represented by R¹ include 2-methoxyethyl, 2-ethoxyethyl, 2-propoxyethyl, 2-isopropoxyethyl, 2-butoxyethyl, 2-hexyloxyethyl, 1-butoxy-2-propyl, 2-dodecyloxyethyl and the like.

Preferred examples of substituted phenyl group of alkenyl group with 1 to 40 carbon atoms represented by R¹ include o-methoxy-p-propenylphenyl group, p-butenylphenyl group and the like. Preferred examples of substituted phenyl group of alkoxycarbonyl group with 2 to 42 carbon atoms represented by R¹ include p-ethoxycarbonylphenyl, p-butoxycarbonylphenyl, p-ethoxycarbonylphenyl, p-octylcarbonylphenyl and the like. Preferred examples of alkoxy phenyl group with 7 to 26 carbon atoms represented by R¹ include o-, m-, or p-methoxyphenyl, p-dodecyloxyphenyl and the like. Preferred examples of alkyl phenyl group with 7 to 26 carbon atoms represented by R¹ include o-, m-, or p-methylphenyl, 2,5-dimethylphenyl, p-nonylphenyl, o-, m-, or p-isopropylphenyl, diisopropylphenyl and the like.

For alkyl group, cycloalkyl group, alkenyl group or aryl group, which may be substituted, represented by R² in the general formula (1), those which may be preferable for R¹ are used as well. For R¹ in the general formula (1), in particular, alkyl group with 8 to 20 carbon atoms, alkenyl group with 8 to 20 carbon atoms and cycloalkyl group with 8 to 20 carbon atoms are preferable. Specific examples of the compound of present invention are described below, but not limited thereto, and more specifically, they are described in J.P. KOKAI No. Sho 61-200538.

| | |
|---|---|
| I-1 | (C₄H₉O)̵₃P=O |
| I-2 | (C₅H₁₁O)̵₃P=O |
| I-3 | 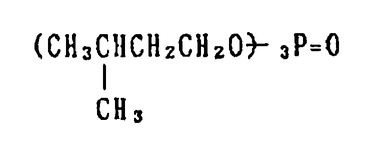 |
| I-4 | 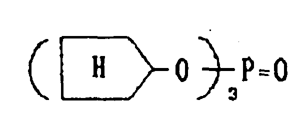 |
| I-5 | (C₆H₁₃O)̵₃P=O |
| I-6 | 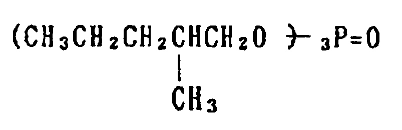 |
| I-7 | 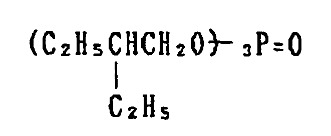 |
| I-8 | 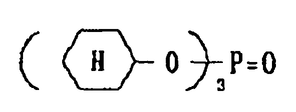 |
| I-9 | (C₇H₁₅O)̵₃P=O |
| I -10 | 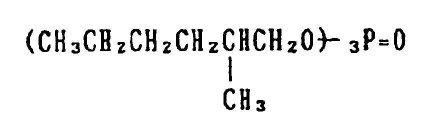 |
| I -11 | 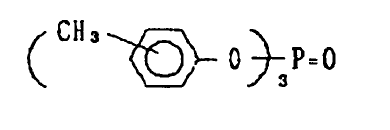 |
| I -12 | (C₈H₁₇O)̵₃P=O |
| I -13 | 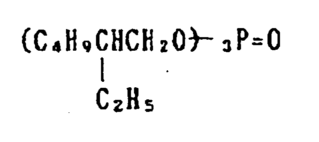 |
| I -14 | 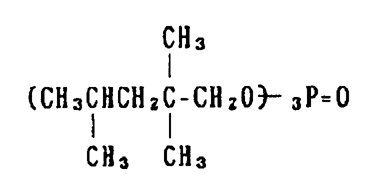 |
| I -15 | (C₉H₁₉O)̵₃P=O |
| I -16 | 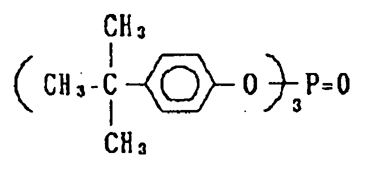 |

### (ii) Dicarboxylic acid ester

In the present invention, a dicarboxylic acid ester denotes a compound having two carboxylate ester functional groups represented by the formula (2):

R³OOC-L¹-COOR⁴ (2)

wherein L¹ represents a divalent substituted or unsubstituted aliphatic hydrocarbon group, substituted or unsubstituted alicyclic hydrocarbon group or substituted or unsubstituted aromatic hydrocarbon group, R³ and R⁴ each represents a substituted or unsubstituted aliphatic hydrocarbon group, substituted or unsubstituted alicyclic hydrocarbon group or substituted or unsubstituted aromatic hydrocarbon group, and R³ and R⁴ may be the same or different with each other.

L¹ in said general formula (2) is preferably a divalent substituted or unsubstituted aliphatic hydrocarbon group with 1 to 20, more preferably 3 to 20 carbon atoms; substituted or unsubstituted alicyclic hydrocarbon group with 3 to 20, more preferably 6 to 10 carbon atoms; or substituted or unsubstituted aromatic hydrocarbon group with 6 to 15, more preferably 6 to 10 carbon atoms.

In the case that the aliphatic hydrocarbon group, alicyclic hydrocarbon group, and aromatic hydrocarbon group may have any substituents, the substituents include halogen atom, hydroxyl group, alkoxy group, cyano group, aryloxy group, alkyl group, cycloalkyl group, alkoxycarbonyl group and the like.

R³ and R⁴ are each preferably a substituted or unsubstituted aliphatic hydrocarbon group, alicyclic hydrocarbon group or aromatic hydrocarbon group having 1 to 60 carbon atoms. In the case that R³ and R⁴ each has any substituents, the substituents include halogen atom, hydroxyl group, alkoxy group, cyano group, aryloxy group, alkyl group, cycloalkyl group, alkoxycarbonyl group and the like. R³ and R⁴ are each preferably an alkyl group with 1 to 40 (preferably 1 to 20) carbon atoms, a cycloalkyl group with 6 to 46 (preferably 6 to 26) carbon atoms, an alkenyl group with 1 to 40 (preferably 1 to 20), an alkoxyalkyl group with 3 to 60 (preferably 3 to 40) or a substituted alkyl group of an alkoxycarbonyl group with 2 to 60 (preferably 2 to 40) carbon atoms.

Preferred examples of alkyl group with 1 to 20 carbon atoms represented by R³, R⁴ include methyl group, ethyl group, isopropyl group, butyl group, isobutyl group, pentyl group, hexyl group, 2-ethylbutyl group, isoheptyl group, octyl group, 2-ethylhexyl group, isodecyl group, dodecyl group, isododecyl group, tetradecyl group, hexadecyl group, isooctadecyl group. Preferred examples of cycloalkyl group represented by R³, R⁴ include -CH₂-CycloC₆H₁₂, -CH₂-CycloC₇H₁₃, -CH₂-CycloC₁₂H₂₃. Preferred examples of alkenyl group represented by R³, R⁴ include allyl group (-CH₂CH=CH₂), methacryl group, 9-decene-1-yl group, oleyl group and the like. Preferred examples of alkoxyalkyl group represented by R³, R⁴ include 2-methoxyethyl group, 2-ethoxyethyl group, 2-propoxyethyl group, 2-isopropoxyethyl group, 2-butoxyethyl group, 2-hexyloxyethyl group, 1-butoxy-2-propyl group, 2-dodecyloxyethyl group and the like.

Preferred examples of substituted alkyl group of alkoxycarbonyl group represented by R³, R⁴ include ethoxycarbonylethyl group, 1-butoxycarbonylethyl group, 1-ethoxycarbonylethyl group and the like. R³ and R⁴ are each particularly preferably an alkyl group substituted by alkyl group, alkenyl group, alkoxy group, alkoxyalkyl group, alkoxycarbonyl group, most preferably alkyl group. Specific examples of the compound of present invention are described below, but not limited thereto, and more specifically, they are described in J.P. KOKAI No. Sho 62-9348.

Particularly preferred compounds represented by the general formula (2) include those of the general formula (2) wherein L¹ is a phenylene group or an alkylene group with 3 to 10 carbon atoms.

Compounds of general formula (2) wherein L¹ is a phenylene group include terephthalate ester compounds represented by the general formula (2-1): 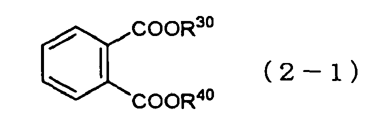 wherein R³⁰ and R⁴⁰ each represents a substituted or unsubstituted aliphatic hydrocarbon group, alicyclic hydrocarbon group or aromatic hydrocarbon group. R³⁰ and R⁴⁰ may be same or different.

The compounds represented by said general formula (2-1) that may be used in the present invention are described below in more detail.

R³⁰ and R⁴⁰ in said general formula (2-1) are each preferably a substituted or unsubstituted aliphatic hydrocarbon group, alicyclic hydrocarbon group or aromatic hydrocarbon group having 1 to 60 carbon atoms. In the case that R³⁰ and R⁴⁰ each has any substituents, the substituents include halogen atom, hydroxyl group, alkoxy group, cyano group, aryloxy group, alkyl group, cycloalkyl group, alkoxycarbonyl group and the like. R³⁰ and R⁴⁰ are each preferably an alkyl group with 1 to 40 (preferably 1 to 20) carbon atoms, a cycloalkyl group with 6 to 46 (preferably 6 to 26) carbon atoms, an alkenyl group with 1 to 40 (preferably 1 to 20), an alkoxyalkyl group with 2 to 60 (preferably 2 to 40) or a substituted alkyl group of an alkoxycarbonyl group with 2 to 60 (preferably 2 to 40) carbon atoms.

Preferred examples of alkyl group represented by R³⁰, R⁴⁰ include methyl group, ethyl group, isopropyl group, butyl group, isobutyl group, pentyl group, hexyl group, 2-ethylbutyl group, isoheptyl group, octyl group, 2-ethylhexyl group, isodecyl group, dodecyl group, isododecyl group, tetradecyl group, hexadecyl group, isooctadecyl group. Preferred examples of cycloalkyl group represented by R³⁰, R⁴⁰ include -CH₂-CycloC₆H₁₂, -CH₂-CycloC₇H₁₃, -CH₂-CycloC₁₂H₂₃ and the like. Preferred examples of alkenyl group represented by R³⁰, R⁴⁰ include allyl group (-CH₂CH=CH₂), methacryl group, 9-decene-1-yl group, oleyl group and the like. Preferred examples of alkoxyalkyl group represented by R³⁰, R⁴⁰ include 2-methoxyethyl group, 2-ethoxyethyl group, 2-propoxyethyl group, 2-isopropoxyethyl group, 2-butoxyethyl group, 2-hexyloxyethyl group, 1-butoxy-2-propyl group, 2-dodecyloxyethyl group and the like.

Preferred examples of substituted alkyl group of alkoxycarbonyl group represented by R³⁰, R⁴⁰ include ethoxycarbonylethyl group, 1-butoxycarbonylethyl group, 1-ethoxycarbonylethyl group and the like. R³⁰ and R⁴⁰ are each particularly preferably an alkyl group substituted by alkyl group, alkenyl group, alkoxy group, alkoxyalkyl group, alkoxycarbonyl group, most preferably alkyl group.

Specific examples of compounds represented by the general formula (2-1) include following compounds.

| | |
|---|---|
| II-1 | 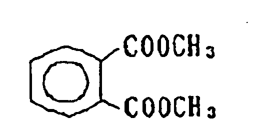 |
| II-2 | 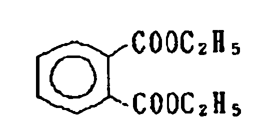 |
| II-3 | 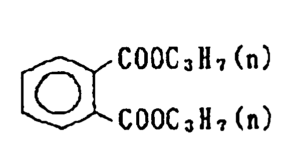 |
| II-4 | 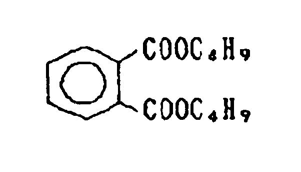 |
| II-5 | 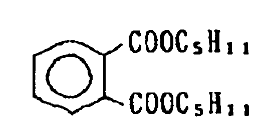 |
| II-6 | 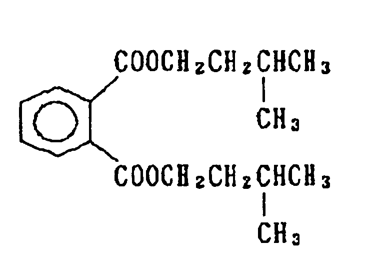 |
| II-7 | 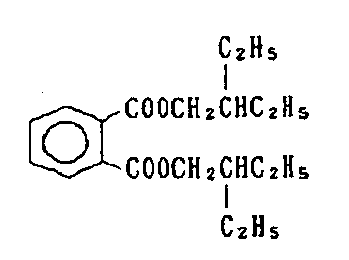 |
| II-8 | 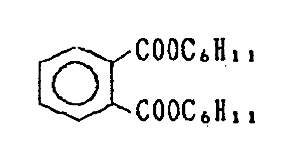 |
| II-9 | 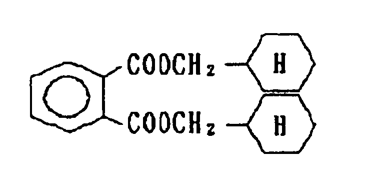 |
| II-10 | 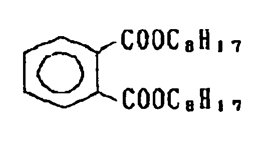 |
| II-11 | 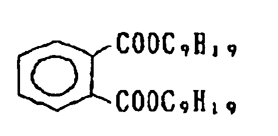 |

From the viewpoint of the effect of the present invention, compounds represented by the general formula (2) wherein L¹ is an alkylene group with 3 to 10 carbon atoms include adipate ester, azelate ester, sebacate ester and the like, more specifically diisononyl adipate, 2-ethylhexyl adipate, dioctyl adipate, dioctyl azelate, dibutyl sebacate, dioctyl sebacate and the like.

### (iii) Tricarboxylic acid ester

In the present invention, a tricarboxylic acid ester denotes a compound having three carboxylate ester functional groups represented by the formula (3): 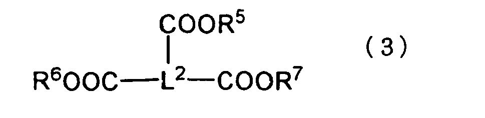 wherein L² represents a trivalent substituted or unsubstituted aliphatic hydrocarbon group, substituted or unsubstituted alicyclic hydrocarbon group or substituted or unsubstituted aromatic hydrocarbon group, and R⁵, R⁶ and R⁷ each represents a substituted or unsubstituted aliphatic hydrocarbon group, substituted or unsubstituted alicyclic hydrocarbon group or substituted or unsubstituted aromatic hydrocarbon group, and R⁵, R⁶ and R⁷ may be same or different each other.

The compounds represented by said general formula (3) that may be used in the present invention are described below in more detail.

L¹ in said general formula (3) is preferably a trivalent substituted or unsubstituted aliphatic hydrocarbon group with 1 to 15, more preferably 1 to 6 carbon atoms; substituted or unsubstituted alicyclic hydrocarbon group with 3 to 15, more preferably 6 to 10 carbon atoms; or substituted or unsubstituted aromatic hydrocarbon group with 6 to 15, more preferably 6 to 10 carbon atoms.

In the case that the aliphatic hydrocarbon group, alicyclic hydrocarbon group, and aromatic hydrocarbon group may have any substituents, the substituents include halogen atom, hydroxyl group, alkoxy group, cyano group, aryloxy group, alkyl group, cycloalkyl group, alkoxycarbonyl group and the like.

R⁵, R⁶ and R⁷ are each preferably a substituted or unsubstituted aliphatic hydrocarbon group, alicyclic hydrocarbon group or aromatic hydrocarbon group having 1 to 60 carbon atoms. In the case that R⁵, R⁶ and R⁷ each has any substituents, the substituents include halogen atom, hydroxyl group, alkoxy group, cyano group, aryloxy group, alkyl group, cycloalkyl group, alkoxycarbonyl group and the like. R⁵, R⁶ and R⁷ are each preferably an alkyl group with 1 to 40 (preferably 1 to 20) carbon atoms, a cycloalkyl group with 6 to 46 (preferably 6 to 26) carbon atoms, an alkenyl group with 1 to 40 (preferably 1 to 20), an alkoxyalkyl group with 3 to 60 (preferably 3 to 40) or a substituted alkyl group of an alkoxycarbonyl group with 2 to 60 (preferably 2 to 40) carbon atoms.

Preferred examples of alkyl group represented by R⁵, R⁶, R⁷ include methyl group, ethyl group, isopropyl group, butyl group, isobutyl group, pentyl group, hexyl group, 2-ethylbutyl group, isoheptyl group, octyl group, 2-ethylhexyl group, isodecyl group, dodecyl group, isododecyl group, tetradecyl group, hexadecyl group, isooctadecyl group. Preferred examples of cycloalkyl group represented by R⁵, R⁶, R⁷ include -CH₂-CycloC₆H₁₂, -CH₂-CycloC₇H₁₃, -CH₂-CycloC₁₂H₂₃ and the like. Preferred examples of alkenyl group represented by R⁵, R⁶, R⁷ include allyl group (-CH₂CH=CH₂), methacryl group, 9-decene-1-yl group, oleyl group and the like. Preferred examples of alkoxyalkyl group represented by R⁵, R⁶, R⁷ include 2-methoxyethyl group, 2-ethoxyethyl group, 2-propoxyethyl group, 2-isopropoxyethyl group, 2-butoxyethyl group, 2-hexyloxyethyl group, 1-butoxy-2-propyl group, 2-dodecyloxyethyl group and the like.

Preferred examples of substituted alkyl group of alkoxycarbonyl group represented by R⁵, R⁶, R⁷ include ethoxycarbonylethyl group, 1-butoxycarbonylethyl group, 1-ethoxycarbonylethyl group and the like. R⁵, R⁶ and R⁷ are each particularly preferably an alkyl group substituted by alkyl group, alkenyl group, alkoxy group, alkoxyalkyl group, alkoxycarbonyl group, most preferably alkyl group.

From the viewpoint of the effect of the present invention, the compound represented by the general formula (3) is preferably trimellitate ester or citrate ester.

More specifically, trimellitate ester includes trimethyl trimellitate, triethyl trimellitate, tributyl trimellitate, tri-2-ethylhexyl trimellitate, trioctyl trimellitate and the like. Moreover, citrate ester includes tributyl acetyl citrate and the like.

Among the phosphate ester, the dicarboxylic acid ester and the tricarboxylic acid ester described above, it is particularly preferable to use at least one compound selected from the group consisting of phosphate ester, phthalate ester, trimellitate ester, citrate ester and ester compound of the general formula (2) wherein L¹ is an alkylene group with 3 to 10 carbon atoms, from the viewpoint of the effect of the present invention.

The amount of the plasticizer added in the present invention is from 0.001 to 30 % by weight, preferably from 0.01 to 15 % by weight, more preferably from 0.05 to 10 % by weight based on the total weight of the ink composition.

The ester compound according to the present invention, for example, phthalate ester used widely as a plasticizer for vinyl chloride is known as a material that gives softness and flexibility to vinyl chloride. From the state that the vinyl chloride molecules strongly attract each other, the softness is given by causing the plasticizer to enter the intermolecular of the vinyl chloride to pull the intermolecular distance apart. It is important that a plasticizer has a polar part and a nonpolar part, and a compound having an ester structure is suitable for it. That is the polar part corresponds to the ester moiety, and the nonpolar part corresponds to a chain alkyl moiety.

In the case of a photo-curable ink, it is thought a polymer chain becomes a major component after cured, but the foregoing plasticizer enters the intermolecular of the polymer contributing to the improvement of the wettability and leveling of the ink, and then result in further improvement of the adhesion between a substrate and the ink. The present invention has been able to obtain an ink composition with improved adhesion and a lithographic plate with improved printing durability.

### (1-2) Compound generating an acid by irradiation of radiant ray

The compound generating an acid by irradiation of radiant ray (also referred to as an acid generator) is added to the ink composition of the present invention. For instance, the compound used for the chemical amplification type photoresist and the optical cation polymerization is used as a preferred acid generator that may be used in the present invention (see Society for Organic Electronics Materials, ed., "Organic Materials for Imaging", Bunshin Syuppan (1993), 187-192). Examples of acid generator suitable for this invention are enumerated as follows.

Firstly, B(C₆F₅)₄⁻, PF₆⁻, AsF₆⁻, SbF₆⁻, CF₃SO3⁻ salt of aromatic onium compound such as diazonium, ammonium, iodium, sulfonium, phosphonium and the like may be included. Secondary, sulfonated compound which generates a sulfonic acid may be included. Thirdly, halide which photo-generates a hydrogen halide may be also used. Fourthly, iron arene complex may be included.

The acid generator in the present invention can be used alone or a combination of two or more acid generators may be used. These acid generators are suitably contained within the range from 0.01 to 20 parts by weight, preferably the range from 0.5 to 15 parts by weight, based on 100 parts of the polymerizable compound. Moreover, in the case that a sensitizing dye (described below) is added to the ink composition of the present invention, the acid generator of the present invention is suitably contained in the ink composition by the amount of the mass ratio of the acid generator: the sensitizing dye of 200 : 1 to 1 : 200, preferably 50 : 1 to 1 : 50, more preferably 20 : 1 to 1 : 5.

The ratio of the amount of (b) (photo-acid generator) to the amount of (c) (plasticizer) used in the ink composition of the present invention is 20 : 1 to 1 : 5.

### (1-3) Cationically Polymerizable Compound

The ink composition of the present invention comprises a cationically polymerizable compound. For example, cation polymerization based photo-curable resin is known as a cationically polymerizable compound, and recently cation polymerization based photo-curable resin which has been sensitized in the area with the wavelength longer than that of visible light has been also disclosed in, for example, J.P. KOKAI Nos. Hei 6-43633, Hei 8-324167 and the like.

Various known cationically polymerizable compounds (monomers) may be used as cationically polymerizable compounds. For example, epoxy compound, vinyl ether compound, oxetane compound and the like exemplified in J.P. KOKAI Nos. Hei 6-9714, 2001-31892, 2001-40068, 2001-55507, 2001-310938, 2001-310937, and 2001-220526 are included. The cationically polymerizable compounds of the present invention include oxetane compound, epoxy compound, vinyl ether compound or a combination thereof.
(a) Oxetane compound represents a compound having an oxetane ring, and include all the known oxetane compounds containing an oxetane ring such as those described in J.P. KOKAI Nos. 2001-220526 and 2001-310937. In particular, compounds containing an oxetane ring represented by the general formula (1) are preferable.

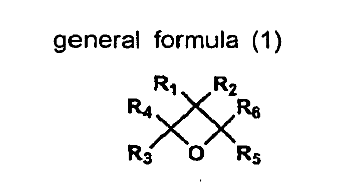

In the general formula (1), R₁ to R₆ each represents a hydrogen atom or a substituent, with the proviso that at least one of the groups represented by R₃ to R₆ is a substituent.

In the general formula (1), each substituent represented by R₁ to R₆ includes, for example, fluorine atom, alkyl group with 1 to 6 carbon atoms (for example, methyl group, ethyl group, propyl group, butyl group, etc.), fluoroalkyl group with 1 to 6 carbon atoms, allyl group, aryl group (for example, phenyl group, naphthyl group, etc.), furyl group or thienyl group. Moreover these groups may have further any substituents.

The compounds having one oxetane ring in the molecule include the compounds represented by the following general formulas (2) to (5).

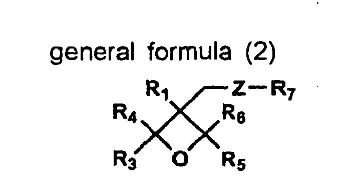

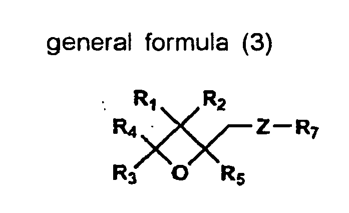

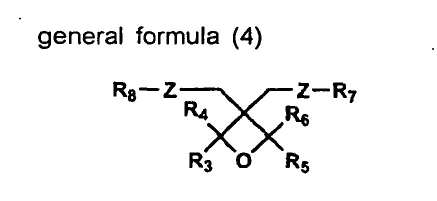

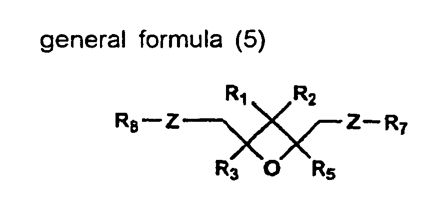

In the above general formulas (2) to (5), each of R₁ to R₆ represents synonymous group with the respective group in the general formula (1), and Z each independently represents an oxygen or sulfur atom, or a divalent hydrocarbon group optionally containing oxygen or sulfur atom in its main chain.

In the above general formulas (2) to (5), each substituent represented by R₇ or R₈ denotes alkyl group with 1 to 6 carbon atoms (for example, methyl group, ethyl group, propyl group or butyl group etc.), alkenyl group with 1 to 6 carbon atoms (for example, 1-propenyl group, 2-propenyl group, 2-methyl-1-propenyl group, 2-methyl-2-propenyl group, 1-butenyl group, 2-butenyl group, 3-butenyl group, etc.), aryl group (for example, phenyl group, naphthyl group, etc.), aralkyl group (for example, benzyl group, fluorobenzyl group, methoxybenzyl group, etc.), acyl group with 1 to 6 carbon atoms (for example, propylcarbonyl group, butylcarbonyl group, pentylcarbonyl group, etc.), alkoxycarbonyl group with 1 to 6 carbon atoms (for example, ethoxycarbonyl group, propoxycarbonyl group, butoxycarbonyl group, etc.), alkylcarbamoyl group with 1 to 6 carbon atoms (for example, propylcarbamoyl group, butylpentylcarbamoyl group, etc.), alkoxycarbamoyl group (for example, ethoxycarbamoyl group, etc.).

In the above general formulas (2) to (5), a divalent hydrocarbon group optionally containing oxygen or sulfur atom in its main chain represented by Z includes alkylene group (for example, ethylene group, trimethylene group, tetramethylene group, propylene group, ethylethylene group, pentamethylene group, hexamethylene group, heptamethylene group, octamethylene group, nanomethylene group, decamethylene group, etc.), alkenylene group (for example, vinylene group, propenylene group, etc.), alkynylene group (for example, ethynylene group, 3-pentynylene group, etc.), and the carbon atoms of said alkylene group, alkenylene group and alkynylene group may be replaced by oxygen atoms or sulfur atoms.

For the oxetane ring-containing compound of the present invention, the compounds of the above general formulas (2) to (5), wherein R₁ is a lower alkyl group, particularly ethyl group, R₇ and R₈ are propyl group, butyl group, or benzyl group, and Z is a hydrocarbon group not containing oxygen or sulfur atoms (alkylene group, alkenylene group, alkynylene group, etc.) are preferable, and wherein at least one of the groups represented by R₃ to R₆ is a substituent.

The compounds containing two or more oxetane rings include the compounds represented by the following general formulas (6) or (7).

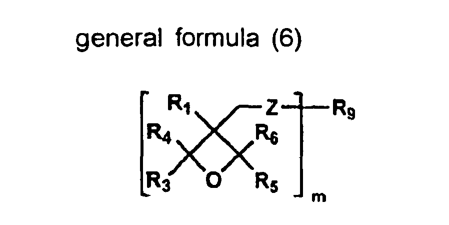

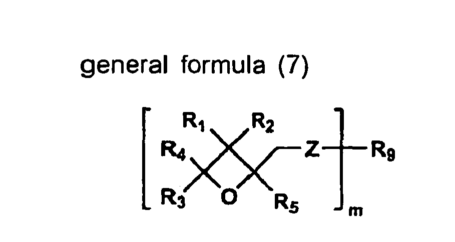

In the above general formulas (6) and (7), m represents 2, 3 or 4, and Z is synonymous with Z in the foregoing general formulas (2) to (5).

Each of R₁ to R₆ represents synonymous group with the respective group in the general formula (1), in the proviso that at least one of R₃ to R₆ in the general formula (6) is a substituent.

R₉ represents a linear or branched alkylene group with 1 to 12 carbon atoms, a linear or branched poly (alkyleneoxy) group, or a divalent group selected from the group consisting of the following general formulas (9), (10) and (11). The above linear or branched alkylene group is preferably the group represented by the following 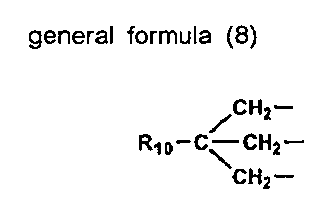 general formula (8).

In the general formula (8), R₁₀ represents a lower alkyl group such as methyl group, ethyl group, propyl group and the like.

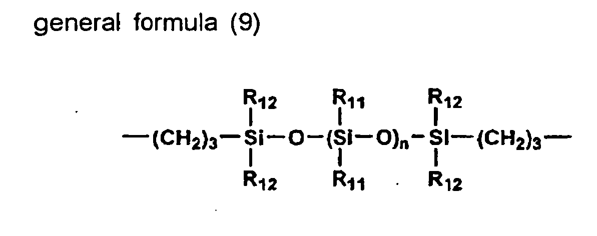

In the above general formula (9), n represents an integer of 1 to 2000, R₁₁ represents an alkyl group with 1 to 10 carbon atoms (for example, methyl group, ethyl group, propyl group, butyl group, pentyl group, hexyl group, heptyl group, octyl group, nonyl group, etc.), or the group selected from the following general formula (12). R₁₂ represents an alkyl group with 1 to 10 carbon atoms (for example, methyl group, ethyl group, propyl group, butyl group, pentyl group, hexyl group, heptyl group, octyl group, nonyl group, etc.).

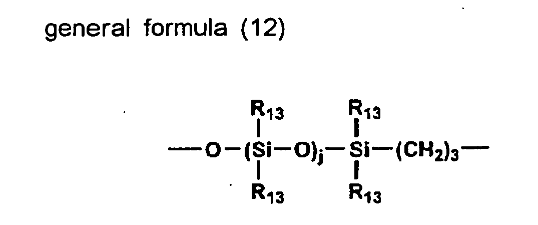

In the above general formula (12), j represents an integer of 1 to 100, and R₁₃ represents an alkyl group with 1 to 10 carbon atoms (for example, methyl group, ethyl group, propyl group, butyl group, pentyl group, hexyl group, heptyl group, octyl group, nonyl group, etc.).

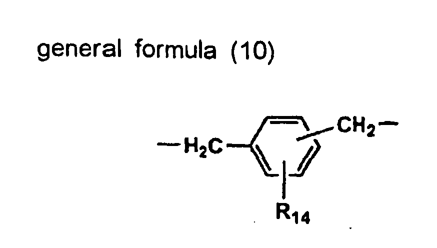

In the above general formula (10), R₁₄ represents a hydrogen atom, an alkyl group with 1 to 10 carbon atoms (for example, methyl group, ethyl group, propyl group, butyl group, pentyl group, hexyl group, heptyl group, octyl group, nonyl group, etc.), an alkoxy group with 1 to 10 carbon atoms (for example, methoxy group, ethoxy group, propoxy group, butoxy group, pentoxy group, etc.), a halogen atom (for example, fluorine, chlorine, bromine, iodine, etc.), a nitro group, cyano group, mercapto group, alkoxycarbonyl group (for example, methyloxycarbonyl group, ethyloxycarbonyl group, butyloxycarbonyl group, etc.) or carboxyl group.

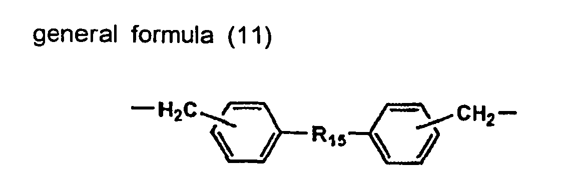

In the above general formula (10), R₁₅ represents an oxygen atom, sulfur atom, NH, SO, SO₂, CH₂, C(CH₃)₂ or C(CF₃)₂.

In preferred embodiment of the part structure of the oxetane ring-containing compound used in the present invention, for example, in the above general formulas (6) and (7), R₁ is preferably a lower alkyl group (for example, methyl group, ethyl group, propyl group, etc.), particularly preferably ethyl group. Moreover, for R₉, hexamethylene group or the group which R₁₄ is a hydrogen atom in the above general formula (10) is preferably used.

It is preferable that R₁₀ is an ethyl group in the above general formula (8), and each of R₁₂ and R₁₃ is a methyl group in the general formulas (9) and (12), with the proviso that at least one of the groups represented by R₃ to R₆ in the general formula (6) is a substituent.

Moreover, the compounds having two or more oxetane rings in the molecule include the compounds represented by the following general formula (13).

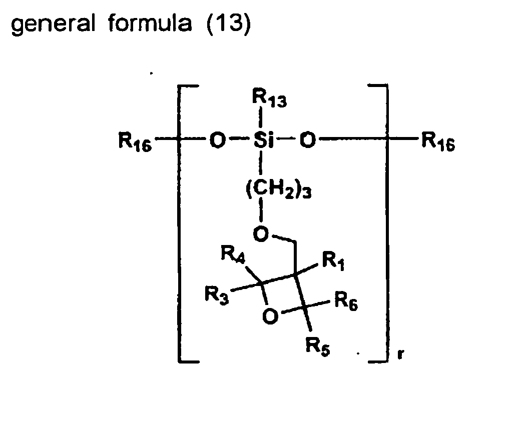

In the above general formula (13), r is an integer of 25 to 200, and R₁₆ is an alkyl group with 1 to 4 carbon atoms or a trialkylsilyl group. Moreover, R₁ and R₄ to R₆ are synonymous with those in said general formula (1), and at least one of the groups represented by R₃ to R₆ is a substituent.

The specific examples of the oxetane ring-containing compound represented by the above general formula (1) according to the present invention are listed in the following table 1, but not limited thereto.

**Table 1**

| | | | | | | |
|---|---|---|---|---|---|---|
| 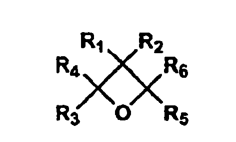 | | | | | | |

| compound No. | R₅ | R₆ | R₃ | R₄ | R₁ | R₂ |
|---|---|---|---|---|---|---|
| 1 | *1 | H | H | H | -CH₃ | -CH₃ |
| 2 | -CH₃ | H | H | H | -CH₃ | -CH₃ |
| 3 | -CH₂CH₃ | H | H | H | -CH₃ | -CH₃ |
| 4 | -CH₂CH₂CH₃ | H | H | H | -CH₃ | -CH₃ |
| 5 | -CH(CH₃)CH₃ | H | H | H | -CH₃ | -CH₃ |
| 6 | -(CH₂)₇CH₃ | H | H | H | -CH₃ | -CH₃ |
| 7 | *2 | H | H | H | -CH₃ | -CH₃ |
| 8 | -CH₃ | H | -CH₃ | H | -CH₃ | -CH₃ |
| 9 | -CH₂CH₂CH₃ | H | -CH₂CH₂CH₃ | H | -CH₃ | -CH₃ |
| 10 | -CH₃ | -CH₃ | H | H | -CH₃ | -CH₃ |
| 11 | -CH₂CH₂CH₃ | -CH₂CH₂CH₃ | H | H | -CH₃ | -CH₃ |
| 12 | *2 | *2 | H | H | -CH₃ | -CH₃ |
| 13 | *3 | H | H | H | -CH₃ | -CH₃ |
| 14 | *4 | H | H | H | -CH₃ | -CH₃ |
| 15 | -CF₃ | H | H | H | -CH₃ | -CH₃ |
| 16 | *4 | H | H | H | -CH₃ | -CH₃ |
| 17 | *5 | H | H | H | -CH₃ | -CH₃ |
| 18 | *6 | H | H | H | -CH₃ | -CH₃ |
| 19 | *7 | H | H | H | -CH₃ | -CH₃ |
| 20 | *8 | H | H | H | -CH₃ | -CH₃ |
| 21 | -OCH₃ | H | H | H | -CH₃ | -CH₃ |
| 22 | *9 | H | H | H | -CH₃ | -CH₃ |
| 23 | *10 | H | H | H | -CH₃ | -CH₃ |
| 24 | *11 | H | H | H | -CH₃ | -CH₃ |
| 25 | *11 | H | -CFH₂ | H | -CH₃ | -CH₃ |
| 26 | *11 | H | -CF₂H | H | -CH₃ | -CH₃ |
| 27 | -CH₃ | H | -CF₂H | H | -CH₃ | -CH₃ |
| 28 | -CH₃ | H | -CF₃ | H | -CH₃ | -CH₃ |
| 29 | *2 | H | *2 | H | -CH₃ | -CH₃ |
| 30 | *12 | H | H | H | -CH₃ | -CH₃ |
| 31 | *13 | H | H | H | -CH₃ | -CH₃ |
| 32 | *14 | H | H | H | -CH₃ | -CH₃ |
| 33 | *15 | H | H | H | -CH₃ | -CH₃ |

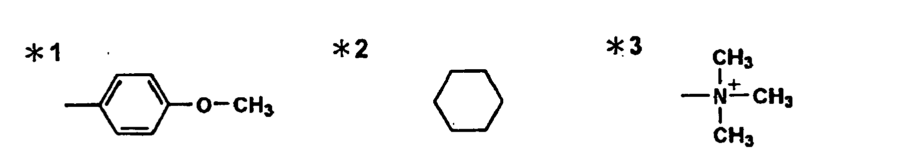

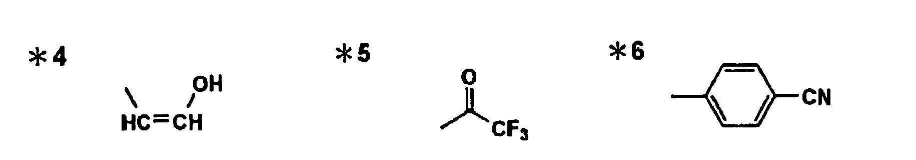

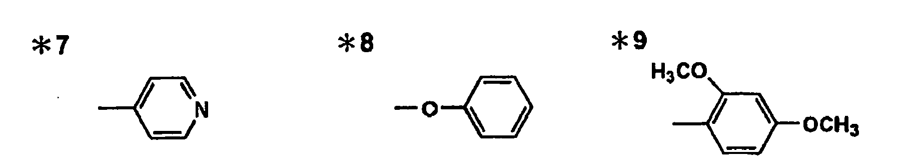

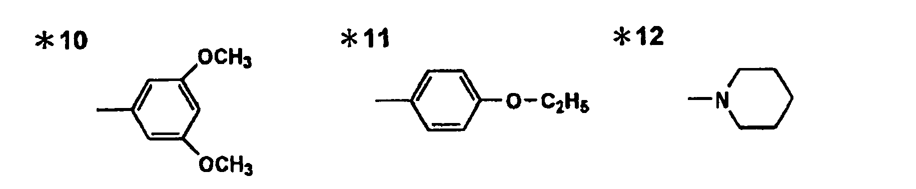

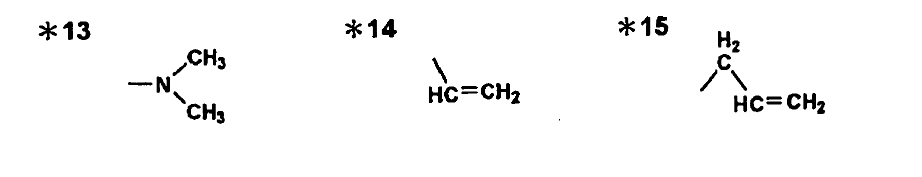

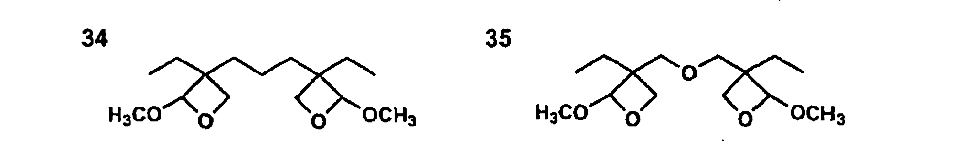

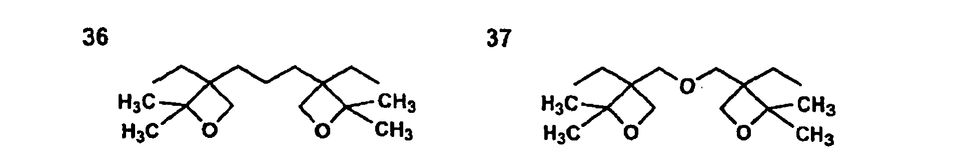

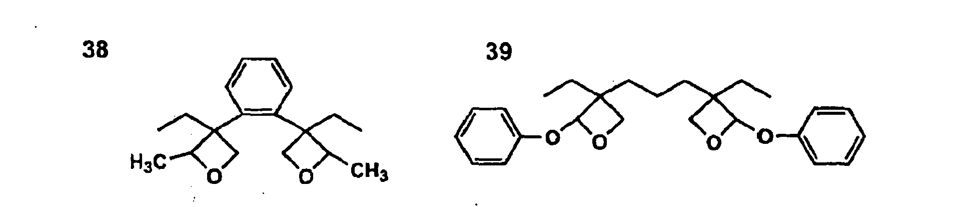

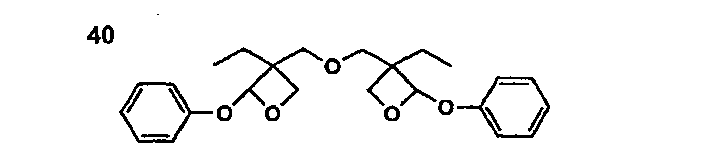

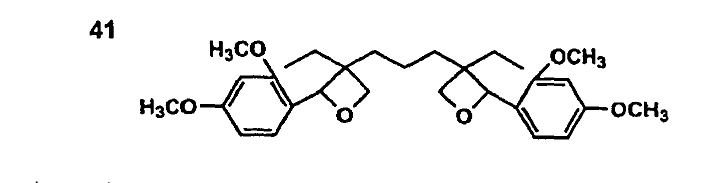

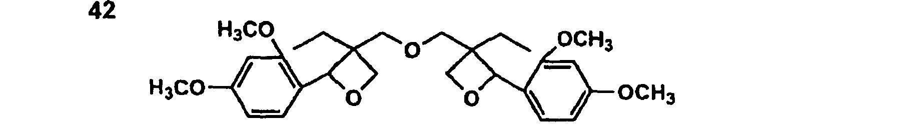

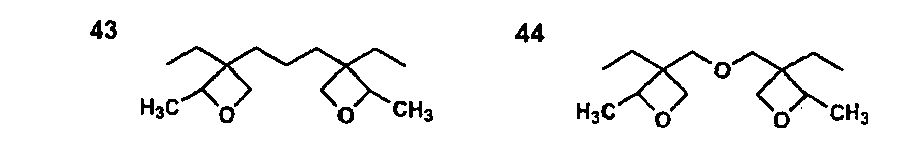

Moreover, each of the foregoing compounds can be easily synthesized primarily through the scheme shown below by referring to the method described in the fourth item in "Catch-ball between Polymer Science and Organic Chemistry" and the following references, but the synthesis method is not limited thereto.

### Synthesis of general formula (1)

monofunctional compound 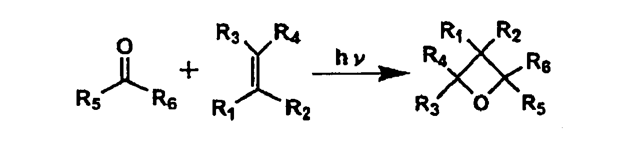
difunctional compound 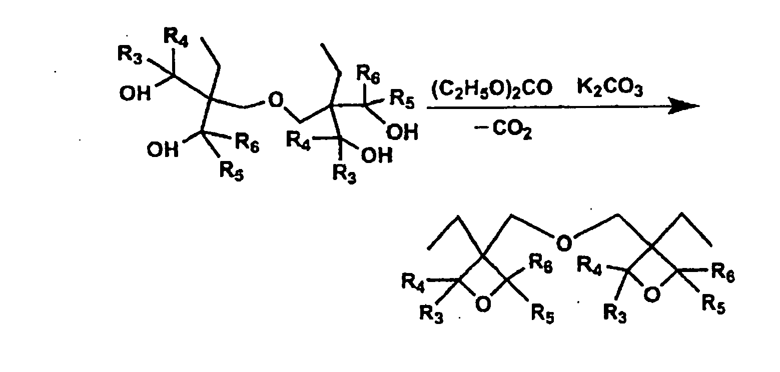
   1) Hu Xianming, Richard M. Kellogg, Synthesis, 533-538, May (1995);
   2) A. O. Fittton, J. Hill, D. Ejane, R. Miller, Synth., 12, 1140 (1980);
   3) Toshiro Imai and Shinya Nishida, Can. J. Chem. Vol. 59, 2503-2509 (1981);
   4) Nobujiro Shimizu, Shintaro Yamaola, and Yuho Tsuno, Bull. Chem. Soc. Jpn., 56, 3853-3854 (1983);
   5) Walter Fisher and Cyrila A. Grob, Helv. Chim. Acta., 61, 2336 (1978);
   6) Chem. Ber. 101, 1850 (1968);
   7) "Heterocyclic Compounds with Three- and Four- membered Rings", Part Two, Chapter IX, Interscience Publisers, John Wiley & Sons, New York (1964)
   8) H. A. J. Curless, "Synthetic Organic Photochemistry", Plenum, New York (1984);
   9) M. Braun, Nachr. Chem. Tech. Lab., 33, 213 (1985);
   10) S. H. Schroester, J. Org. Chem., 34, 5, 1181 (1969);
   11) D. R. Arnold, Adv. Photochem., 6, 301 (1968).

### (b) The epoxy compounds include aromatic epoxides, alicyclic epoxides and aliphatic epoxides and the like.

The preferred aromatic epoxides are di- or polyglycidyl ethers prepared by the reaction between polyhydric phenol having at least one aromatic nucleus or alkylene oxide adduct thereof and epichlorohydrin, including for example, di- or polyglycidyl ethers of bisphenol A or alkylene oxide adduct thereof, di- or polyglycidyl ethers of hydrogenated bisphenol A or alkylene oxide adduct thereof, novolac type epoxy resin and the like. Here, alkylene oxides include ethylene oxide, propylene oxide and the like.

Alicyclic epoxides are preferably cyclohexene oxide or cyclopentene oxide-containing compounds which are produced by epoxidizing a compound having at least one cycloalkane ring such as cyclohexene or cyclopentene ring, etc. with an appropriate oxdizing agent such as hydrogen peroxide, peracid and the like.

The preferred aliphatic epoxides include di- or polyglycidyl ethers of aliphatic polyhydric alcohol or alkylene oxide adduct thereof and the like. Representative examples such compounds include diglycidyl ethers of alkylene glycols such as diglycidyl ether of ethylene glycol, diglycidyl ether of propylene glycol, diglycidyl ether of 1,6-hexanediol, etc.; polyglycidyl ethers of polyhydric alcohols such as di- or triglycidyl ethers of glycerine or alkylene oxide adduct thereof, etc.; diglycidyl ethers of polyalkylene glycols such as diglycidyl ethers of polyethylene glycol or alkylene oxide adduct thereof, diglycidyl ethers of polypropylene glycol or alkylene oxide adduct thereof, etc. Here, alkylene oxides include ethylene oxide, propylene oxide and the like.

Among these epoxides, considering quick curability, aromatic epoxides and alicyclic epoxides are preferable, particularly alicyclic epoxides are preferable. In the present invention, one of epoxides described above can be used alone or an appropriate combination of two or more epoxides may be used.

Moreover, in the present invention, in terms of AMES test and sensitization test, etc., particularly considering from the viewpoint of safety to human, epoxy compounds containing an oxirane group is particularly preferably at least either epoxidized fatty acid ester or epoxidized fatty acid glyceride.

Any epoxidized fatty acid esters or epoxidized fatty acid glycerides which epoxy groups have been introduced to fatty acid esters or fatty acid glycerides may be used without any limitations.

As epoxidized fatty acid esters, epoxy methyl stearate, epoxy butyl stearate, epoxy octyl stearate and the like, which are prepared by epoxidizing oleate esters, are used. Moreover, as epoxidized fatty acid glycerides, epoxidized soybean oil, epoxidized linseed oil, epoxidized caster oil and the like, which are similarly prepared by epoxidizing soybean oil, linseed oil, caster oil and the like, are used.
(c) Vinyl ether compounds include, for example, di- or trivinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, trimethylolpropane trivinyl ether, etc.; monovinyl ether compounds such as ethyl vinyl ether, n-butyl vinyl ether, iso-butyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, iso-propyl vinyl ether, iso-propenylether-O-propylene carbonate, dodecyl vinyl ether, diethylene glycol monovinyl ether, octadecyl vinyl ether and the like.

Among these vinyl ether compounds, considering curability, adhesion and surface hardness, di- or trivinyl ether compounds are preferable, particularly divinyl ether compounds are preferable. In the present invention, one of vinyl ether compounds described above can be used alone or an appropriate combination of two or more vinyl ether compounds may be used.

### (Added amount of polymerizable compounds)

The added amount of the polymerizable compounds of the present invention is for example, from 1 to 97 % by weight, more preferably from 10 to 70 % by weight based on the total weight of the above ink composition of the present invention.

### (1-4) Colorant

It is preferable that a colorant is added to the ink composition of the present invention, because a visible image can be formed by adding a colorant to the ink composition of the present invention. For example, the addition of a colorant is not necessarily required in order to form an image part area in a lithographic plate, but it is preferable to use a colorant in terms of inspecting the obtained lithographic plate.

Usable colorant in the present invention is not limited particularly, and any known various colorants (pigments, dyes) may be appropriately selected to use according to the application. For example, when an image with excellent weather resistance is desired to form, a pigment is preferable. Both of water soluble dye and oil soluble dye may be used, but oil soluble dye being difficult to absorb moisture is preferable because cationic polymerization initiator is subject to hydrolysis by water (moisture) and the like.

The colorant of the present invention is particularly not limited, but for example, organic or inorganic pigments of the following number described to the color index can be used.

That is, as red or magenta pigments, Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, 257, Pigment Violet 3, 19, 23, 29, 30, 37, 50, 88, Pigment Orange 13, 16, 20, 36, as blue or cyanogen pigments, Pigment Blue 1, 15, 15:1, 15:2, 15:3, 15:4, 15:6, 16, 17-1, 22, 27, 28, 29, 36, 60, as green pigments, Pigment Green 7, 26, 36, 50, as yellow pigments, Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, 193, as black pigments, Pigment Black 7, 28, 26, as white pigments, Pigment White 6, 18, 21 and the like can be used according to the purpose.

The colorant is required to be dispersed moderately in that ink after the addition to the ink composition of the present invention. For dispersing colorants, for example, each dispersion device such as ball mill, sand mill, attritor, roll mill, agitator, Henschel mixer, colloid mill, supersonic homogenizer, pearl mill, wet jet mill, paint shaker and the like can be used.

Moreover, it is also possible to add a dispersant during performing the dispersion of colorants. Although the kind of the dispersant is not particularly limited, it is preferable to use a high molecular dispersant including, for example, Solsperse series from Zeneca Co. Ltd. It is also possible to use a synergist corresponding to various pigments as a dispersing aid. These dispersant and dispersing aid are preferably added from 1 to 50 parts by weight based on 100 parts of the colorant of the present invention.

The colorant may be directly added to the ink composition of the present invention, but for the improvement of dispersibility, they may be previously added to a dispersing medium such as a solvent or a polymerizable compound according to the present invention. In order to avoid the deterioration of solvent resistance when the solvent remains in the cured image as well as the problem of VOC (Volatile Organic Compound) of the remaining solvent, the colorant is preferably added to the polymerizable compound according to the present invention. Moreover, it is preferable for dispersing aptitude to select monomers with the lowest viscosity as polymerizable compounds to be used.

The average particle size of colorant particle of the present invention is properly, for example, from 0.08 to 0.5 µm, preferably from 0.1 to 0.45 µm, more preferably from 0.15 to 0.4 µm. Moreover, the largest particle size of the colorant is properly, for example, from 0.3 to 10 µm, preferably from 0.3 to 3 µm. It is proper that the selection of pigments, dispersant and dispersing medium, dispersion condition, and filtration condition are set so that such largest particle size may be performed. Blocking of a head nozzle can be suppressed by this particle size management, and the storage stability of ink, the transparency of ink and the curing sensitivity of ink can be maintained.

When a colorant is added in the present invention, for example, the added amount of the colorant is preferably from 1 to 10 % by weight, more preferably from 2 to 6 % by weight based on the total ink weight.

### (1-5) Other Additives

### (1-5-1) Sensitizing dye

In the ink composition of the present invention, a sensitizing dye may be also added for the purpose of absorbing a specified radiation to promote the decomposition of the above polymerization initiator. The sensitizing dye absorbs the specified radiation to become electronically-exited state. The sensitizing dye in electronically-exited state is contacted with polymerization initiator to generate the effect such as electron transfer, energy transfer, exothermic reaction and the like. The polymerization initiator undergoes a chemical change from this to decompose, and then generate a radical, acid or base.

Preferred examples of sensitizing dye include those which belong to compound class mentioned below and have an absorption wavelength ranging from 350 to 450 nm.

Polynuclear aromatics (for example, pyrene, perylene, triphenylene), xanthenes (for example, fluorescein, eosin, erythrosin, rhodamine B, rose bengal), cyanines (for example, thiacarbocyanine, oxacarbocyanine), merocyanines (for example, merocyanine, carbomerocyanine), thiazines (for example, thionine, methylene blue, toluidine blue), acridines (for example, acridine orange, chloroflavin, acriflavine), anthraquinones (for example, anthraquinone), squaliums (for example, squalium), coumarins (for example, 7-diethylamino-4-methylcoumarin).

More preferable examples of sensitizing dye include compounds represented by the following general formulas (IX) to (XIII).

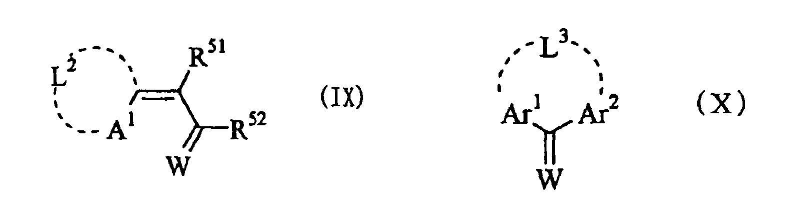

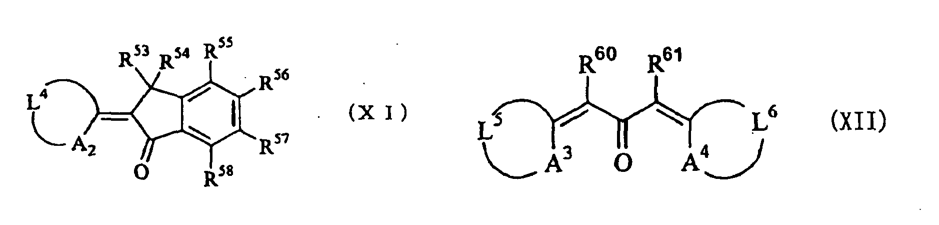

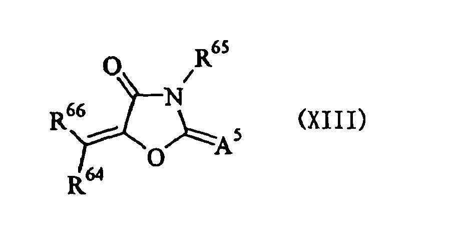

(In the formula (IX), A¹ represents a sulfur atom or NR⁵⁰, wherein R⁵⁰ represents an alkyl group or an aryl group, L² represents a nonmetal atom group which cooperates with an adjacent A² and adjacent carbon atoms to form a basic nucleus of the dye, R⁵¹ and R⁵² each independently represents a hydrogen atom or a monovalent nonmetal atom group, or R⁵¹ and R⁵² may be linked each other to form an acidic nucleus of the dye. W represents an oxygen atom or a sulfur atom.)

(in the formula (X), Ar¹ and Ar² each independently represents an aryl group, and they are linked through a bond by -L³-, wherein L³ represents -O- or -S-. Moreover, W has the same meaning shown for the general formula (IX).)

(In the formula (XI), A₂ represents a sulfur atom or NR⁵⁹, L⁴ represents a nonmetal atom group which cooperates with an adjacent A₂ and adjacent carbon atoms to form a basic nucleus of the dye, R⁵³, R⁵⁴, R⁵⁵, R⁵⁶, R⁵⁷ and R⁵⁸ each independently represents a monovalent nonmetal atom group, and R⁵⁹ represents an alkyl group or an aryl group.)

(In the formula (XII), A³ and A⁴ each independently represents -S- or -NR⁶²- or - NR⁶³-, wherein R⁶² and R⁶³ each independently represents a substituted or unsubstituted alkyl group, or a substituted or unsubstituted aryl group, L⁵ and L⁶ each independently represents a nonmetal atom group which cooperates with an adjacent A³, A⁴ and adjacent carbon atoms to form a basic nucleus of the dye, R⁶⁰ and R⁶¹ each independently represents a hydrogen atom or a monovalent nonmetal atom group, or they may be linked each other to form an aliphatic or an aromatic ring.)

(In the formula (XIII), R⁶⁶ represents an aromatic ring or heterocycle which may have any substituents, A⁵ represents an oxygen atom, a sulfur atom or -NR⁶⁷-. R⁶⁴, R⁶⁵ and R⁶⁷ each independently represents a hydrogen atom or a monovalent nonmetal atom group, R⁶⁷ and R⁶⁴, and R⁶⁵ and R⁶⁷ may be linked each other to form an aliphatic or an aromatic ring, respectively.)

Preferred specific examples of the compounds represented by the general formulas (IX) to (XIII) include those shown as follows.

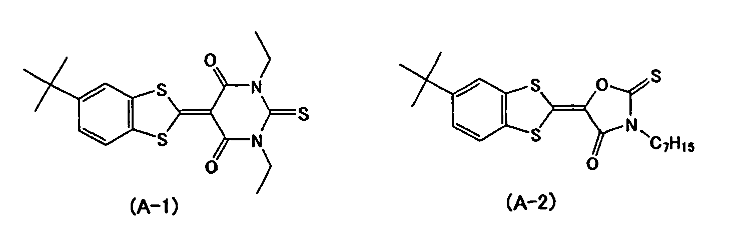

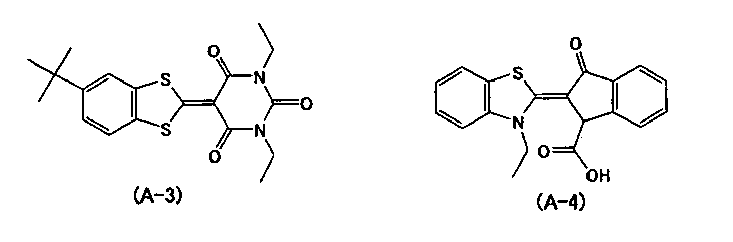

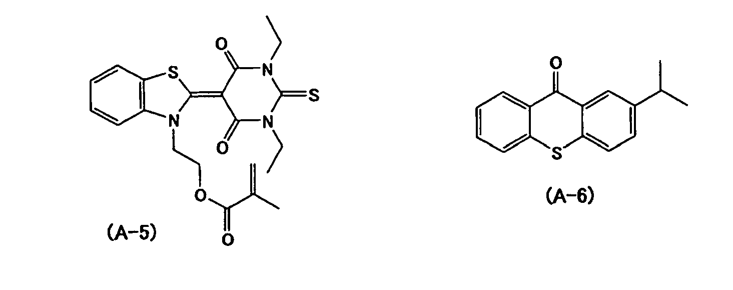

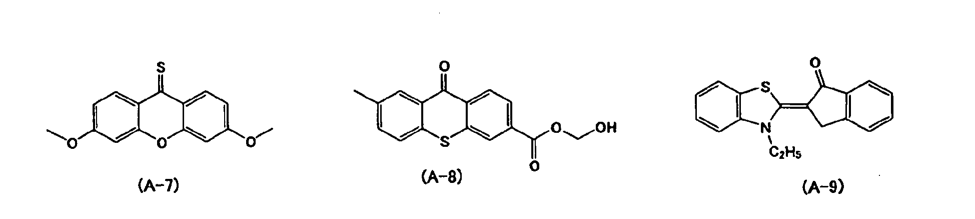

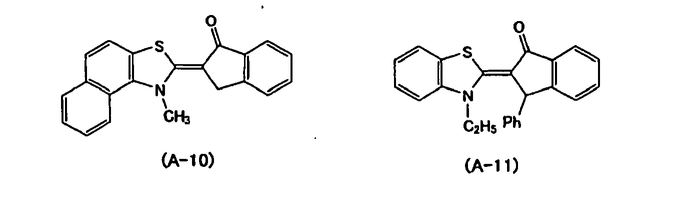

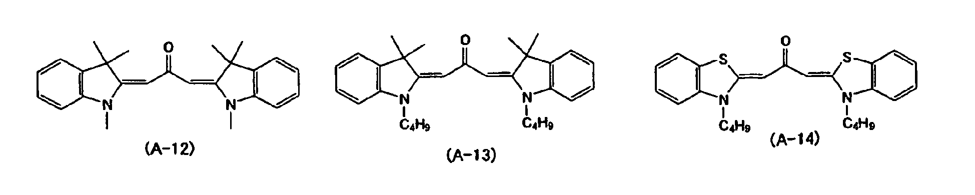

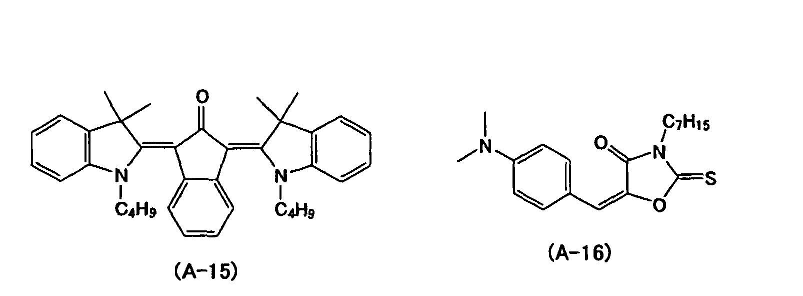

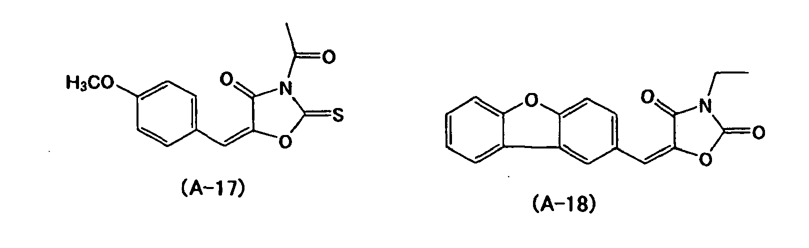

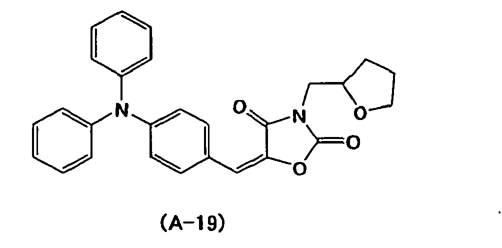

Other examples of consensitizer include thiols and sulfides, for example, thiol compounds described in J.P. KOKAI No. Sho 53-702, J.P. KOKOKU No. Sho 55-500806, J.P. KOKAI No. Hei 5-142772, disulfide compounds described in J.P. KOKAI No. Sho 56-75643, etc. and specifically, include 2-mercaptobenzothiazole, 2-mercaptobenzoxazole, 2-mercaptobenzimidazole, 2-mercapto-4(3H)-quinazoline, β-mercaptonaphthalene and the like.

Further other examples include amino acid compounds (for example, N-phenylglycine, etc.), organic metal compounds described in J.P. KOKOKU No. Sho 48-42965 (for example, tributyltinacetate, etc.), hydrogen donors described in J.P. KOKOKU No. Sho 55-34414, sulfur compounds described in J.P. KOKAI No. Hei 6-308727 (for example, trithiane, etc.), phosphorus compounds described in J.P. KOKAI No. Hei 6-250387 (for example, diethylphosphite, etc.), Si-H, Ge-H compounds described in J.P. KOKAI No. Hei 6-191605 and the like.

### (1-5-3) Other components

Other components can, if necessary, be added to the ink for use in inkjet recording of the present invention. Such other components include polymerization inhibitor, solvent, cationically polymerizable monomer and the like.

The polymerization inhibitor is added from the viewpoint of improving the shelf life. Moreover, the ink for use in inkjet recording of the present invention is preferably heated within the range of 40 to 80°C to provide lower viscosity and ejected, so it is preferable to add the polymerization inhibitor in order to prevent the head from being blocked due to the thermal polymerization, too. The polymerization inhibitor is preferably added from 200 to 20000 ppm based on the total weight of the ink composition of the present invention. The polymerization inhibitors include, for example, hydroquinone, benzoquinone, p-methoxyphenol, TEMPO, TEMPOL, cupferron A1 and the like.

The ink composition of the present invention preferably doesn't contain any solvents because of the problem of solvent resistance and VOC, but it is also effective to add a trace amount of organic solvent such that the above problem doesn't happen in order to improve the adhesion with the recording medium.

The solvents include, for example, ketone based solvent such as acetone, methylethylketone, diethylketone, etc; alcohol based solvent such as methanol, ethanol, 2-propanol, 1-propanol, 1-butanol, tert-butanol, etc.; chlorine based solvent such as chloroform, methylene chloride, etc.; aromatic solvent such as benzene, toluene, etc; ester based solvent such as ethyl acetate, butyl acetate, isopropyl acetate, etc.; ether based solvent such as diethyl ether, tetrahydrofuran, dioxane, etc.; glycol ether based solvent such as ethylene glycol monomethyl ether, ethylene glycol dimethyl ether and the like.

In this case, the amount of the used solvent is preferably within a range of 0.1 to 5 % by weight, more preferably a range of 0.1 to 3 % by weight, based on the entire ink composition.

Moreover for the purpose of increasing the curing sensitivity, in addition to the cationically polymerizable compound and the cation polymerization initiator of the present invention, a radically polymerizable compound and a radical polymerization initiator may be combined, that is to form a radical / cationic hybrid-type cured ink. Besides, well-known compounds can, if necessary, be added to the ink composition of the present invention. For example, surfactant, leveling additive, mat agent, and polyester resin, polyurethane resin, vinyl resin, acrylic resin, rubber resin, wax and the like to adjust the film properties can be appropriately selected to use. Moreover, in order to improve the adhesion to the recording medium such as polyolefin and PET, it is also preferable to contain tackifier which doesn't inhibit the polymerization. Specifically, cohesive polymer with high molecular weight described in J.P. KOKAI No. 2001-49200, p. 5-6 (for example, copolymer consisting of ester between (meth)acrylic acid and alcohol having an alkyl group with 1 to 20 carbon atoms, ester between (meth)acrylic acid and alicyclic alcohol with 3 to 14 carbon atoms, ester between (meth)acrylic acid and aromatic alcohol with 6 to 14 carbon atoms), low molecular weight tackifier resin having polymerizable unsaturated bonds and the like may be contained.

### (1-6) Property of the ink composition

The ink composition for use in inkjet recording has preferably its viscosity from 7 to 30 mPa.s, more preferably from 7 to 20 mPa.s at the temperature during ejecting (for example, from 40 to 80°C, more preferably from 25 to 30 °C) in terms of ejecting ability. For example, the viscosity of the ink composition according to the present invention is from 35 to 500 mPa.s, more preferably from 35 to 200 mPa.s at room temperature (20 to 30 °C). It is preferable to adjust properly the composition ratio so that its viscosity may become within said range. Setting the viscosity at room temperature being high, even when a porous recording medium is used, ink infiltration into the recording medium may be prevented, the decrease of uncured monomers and the decrease of odor may be allowed. Further this can restrain ink blotting when the ink droplet impacts on the medium, and as the result, the image quality is improved.

The surface tension of the ink composition of this invention is preferably from 20 to 30 mN/m, more preferably from 23 to 28 mN/m. When recording to various recording media such as polyolefin, PET, coated paper, non-coated paper and the like, it is preferably 20 mN/m or more from the viewpoint of the blot and infiltration, and it is preferably not more than 30 mN/m from the viewpoint of the wettability.

### (2) Inkjet recording method and inkjet recording device

Inkjet recording method and inkjet recording device that may be preferably adopted for the present invention are described below.

### (2-1) Inkjet recording method

The present invention provides a method for making an image comprising ejecting the above ink composition for use in inkjet recording onto a recording medium, irradiating radiant ray to the ejected ink on the medium, thereby curing the ink composition to form an image. That is to say, the present invention relates to a method comprising:
(a) applying the above ink composition onto a recording medium;
(b) irradiating radiant ray having a peak wavelength of 300 to 450 nm, more preferably 350 to 420 nm to the above ink composition with the output of 2000 mJ/cm² or less, preferably 10 to 2000 mJ/cm², more preferably 20 to 100 mJ/cm², even more preferably 50 to 800 mJ/cm² to cure the above ink composition; and
(c) forming an image onto the recording medium by the cured ink composition.

The recording medium is not particularly limited, conventional papers such as non-coated paper, coated paper, etc., and various unabsorbable resin materials or resin films which they are formed into filmy materials in so-called flexible packaging may be used as the medium. Various plastic films include, for example, PET film, OPS film, OPP film, ONy film, PVC film, PE film, TAC film and the like. Besides, plastics that may be used as materials for recording media include polycarbonate, acrylic resin, ABS, polyacetal, PVA, rubbers and the like. Moreover, metals and glasses can be used as recording media.

When materials with less thermal shrinkage during curing are selected in the ink composition of the present invention, there is an advantage of being able to form a high definition image even in films whose curl and deformation are easily caused due to the generation of heat during cure reaction, for example, thermal shrinkable PET film, OPS film, OPP film, ONy film, PVC film and the like because the adhesion between the cured ink composition and the recording medium is excellent.

### (Example of a method for ejecting an ink composition)

A method for ejecting or impacting an ink composition onto a recording medium is preferably an inkjet method comprising ejecting a special purpose ink from a nozzle as fine droplets to attach onto paper. For the inkjet head, there are a bubble jet method or thermal inkjet method wherein a bubble is created by applying a voltage to a heater and then an ink is pushed out, as well as a piezo element method wherein an ink is pushed out by the vibration of the piezo element, and the ink composition of the present invention may be used in all these methods.

Moreover, the inkjet recording method of the present invention is described by way of example that is a method for making a lithographic printing plate comprising ejecting an ink composition onto the lithographic printing plate to form an image on it.

The lithographic printing plate of the present invention has a hydrophilic substrate and a hydrophobic area (an image) formed on the hydrophilic substrate by the ink composition of the present invention. This method for making a lithographic printing plate comprises the following steps:
(1) ejecting the ink composition of the present invention onto said hydrophilic substrate; and
(2) irradiating radiant ray on the surface of said hydrophilic substrate ejected by the ink to cure said ink, thereby forming a hydrophobic area (an image) comprising said cured ink on said hydrophilic substrate.

### (2-2-1) Lithographic printing plate

Here, the lithographic printing plate has a hydrophilic substrate and an image formed on such substrate.

Conventionally, a so-called PS plate having a constitution provided with a lipophilic photosensitive resin layer on a hydrophilic substrate has been widely used. In the method for making this PS plate, a desired printing plate has been generally obtained by mask exposure (surface exposure) the plate through a lith film followed by melting to remove an unexposed part. In recent years, however, digitalization technology whereby image information is processed, stored, and outputted by computer has been widely used, and then a new image output method corresponding to such technology has been needed. Particularly, computer-to-plate (CTP) technology wherein a highly preferential light such as laser light is scanned according to digitalized image information and a printing plate is directly made without any lith films has been developed.

The method for obtaining a lithographic plate allowing such scanning exposure includes a method whereby a lithographic plate may be directly made by an ink composition. This is a method whereby an ink is ejected onto a substrate, preferably a hydrophilic substrate by inkjet manner and the like, the ink is exposed to radiation, and then the portion of the ink composition is cured to generate a printing plate having a desired image (preferably a hydrophobic image). It is the ink composition of the present invention that is suitable for such method.

A substrate (a recording medium) ejected by the ink composition of the present invention is not limited especially, and may be a dimensionally steady platelike substrate. The substrate is preferably hydrophilic one. For example, paper, paper laminated with plastic (for example, polyethylene, polypropylene, polystyrene, etc.), metallic plate (for example, aluminum, zinc, copper, etc.), plastic film (for example, cellulose diacetate, cellulose triacetate, cellulose propionate, cellulose butyrate, cellulose acetate butyrate, nitrocellulose, polyethylene terephthalate, polyethylene, polystyrene, polypropylene, polycarbonate, polyvinyl acetal, etc.), paper or plastic film laminated or deposited with the metals mentioned above and the like may be included. Preferred substrate includes polyester film and aluminum plate. Of these substrates, an aluminum plate that has good dimensional stability and is relatively cheap is preferable.

The aluminum plate is a pure aluminum plate, an alloy plate that contains aluminum as a major component and trace amount of different elements, or a thin film of aluminum or aluminum alloy laminated with plastics. The different elements contained in the aluminum alloy include silicon, iron, manganese, copper, magnesium, chromium, zinc, bismuth, nickel, titanium and the like. The content of different elements in the alloy is preferably not more than 10 % by weight. A pure aluminum plate is preferable in the present invention, but what slightly contains different elements is also acceptable because the production of a completely pure aluminum is difficult in the refinement technology. The aluminum plate whose composition is not specified, and one of materials which are well-known and public used can be appropriately utilized.

The thickness of the substrate is preferably from 0.1 to 0.6 mm, more preferably from 0.15 to 0.4 mm.

It is preferable to give surface treatment such as surface-roughening treatment and anodization treatment and the like preceding the use of the aluminum plate. The surface treatment makes easy the improvement of hydrophilicity and securing the adhesion between image recording layer and the substrate. The aluminum plate may optionally be subjected to degreasing treatment with surfactant, organic solvent, alkaline aqueous solution and the like to remove the rolling oil on the surface before the plate is surface-roughened.

Such surface-roughening treatments are carried out by various methods and include, for instance, mechanical surface-roughening treatments, electrochemical surface-roughening treatments (methods for electrochemically dissolving the surface) and chemical surface-roughening treatments (methods for chemically and selectively dissolving the surface).

The mechanical surface-roughening treatments can be carried out by any known methods such as ball graining, brush graining, blast graining and buff graining methods. Moreover, transfer method where ruggedness shape is transferred by a roll equipped with the ruggedness can be used at the rolling stage of aluminum.

The method of the electrochemical surface-roughening treatment includes, for instance, the method conducted by passing an alternating or direct current through the aluminum plate in an electrolyte containing an acid such as hydrochloric acid, nitric acid and the like. Moreover, the method using the mixture acid as described in J.P. KOKAI No. Sho 54-63902 may be included.

The surface-roughened aluminum plate may be optionally etched by an alkaline aqueous solution of potassium hydroxide, sodium hydroxide, etc. and further, after neutralizing treatment, if desired, be subjected to an anodization treatment in order to improve its wear resistance.

As the electrolyte used in the anodization treatment, various electrolytes which may form porous oxidized film can be used. In general, sulfuric acid, hydrochloric acid, oxalic acid, chromic acid, or a mixture thereof are used. The concentration of the electrolyte may be appropriately determined depending on its kind.

The condition of the anodization treatment may vary depending on the electrolyte used, so it cannot be generalized, but it is generally preferable that the concentration of the electrolyte is from 1 to 80 % by weight, the solution temperature is from 5 to 70°C, the current density is from 5 to 60 A/dm², the voltage is from 1 to 100 V, and the electrolysis time is from 10 seconds to 5 minutes. The amount of anodized film to be formed is preferably from 1.0 to 5.0 g/m², more preferably from 1.5 to 4.0 g/m². Within this range, good printing durability and good damage resistance of non-image portion in a lithographic printing plate can be obtained.

The substrate used in the present invention may be the substrate having an anodized film by surface treatments as described above as it is. In order to improve the adhesion with the top layer, hydrophilicity, stain resistance, adiabatic property and the like much more, however, an enlarging treatment and a sealing treatment of micropores in the anodized film as described in J.P. KOKAI Nos. 2001-253181 and 2001-322365, and a treatment for giving hydrophilicity to the surface by dipping in an aqueous solution containing hydrophilic compounds, etc. may appropriately be selected to conduct. Of course, these enlarging treatment and sealing treatment shall not be limited to those described above, and any conventionally known methods can be carried out.

### (Sealing treatment)

Not only steam sealing treatment, treatment with an aqueous solution containing inorganic fluorine compounds such as single treatment with fluorozirconic acid and treatment with sodium fluoride, steam sealing treatment which lithium chloride is added, and sealing treatment with hot water can be used.

Of these treatments, treatment with an aqueous solution containing inorganic fluorine compounds, sealing treatment with steam and sealing treatment with hot water are preferable. Each treatment is described as follows.

### (Sealing treatment with an aqueous solution containing inorganic fluorine compounds)

The inorganic fluorine compounds used in the sealing treatment with an aqueous solution containing inorganic fluorine compounds include preferably metallic fluorides.

Specifically, for example, such compounds include sodium flouride, potassium flouride, calcium fluoride, magnesium fluoride, sodium fluorozirconate, potassium fluorozirconate, sodium fluorotitanate, potassium fluorotitanate, ammonium fluorozirconate, ammonium fluorotitanate, potassium fluorotianate, fluorozirconic acid, fluorotitanic acid, hexafluorosilicic acid, nickel fluoride, iron fluoride, fluorophosphoric acid, ammonium fluorophosphate and the like. Of these compounds, sodium fluorozirconate, sodium fluorotitanate, fluorozirconic acid and fluorotitanic acid are preferable.

The concentration of the inorganic fluorine compound in an aqueous solution is 0.01 % by weight or more, more preferably 0.05 % by weight or more, in terms of performing sufficient sealing of micropores in the anodized film. Moreover, it is preferably not more than 1 % by weight, more preferably not more than 0.5 % by weight, in terms of stain resistance.

The aqueous solution containing the inorganic fluorine compounds preferably comprises further phosphate compounds. When the solution comprises phosphate compounds, the performance of the solution such as developing ability on a machine and stain resistance may be improved because the hydrophilicity of the surface of the anodized film is increased.

Phosphate compounds preferably include, for example, phosphates of metals such as alkaline metals, alkaline earth metals and the like.

Specifically, such phosphates include, for example, zinc phosphate, aluminum phosphate, ammonium phosphate, diammonium hydrogenphosphate, ammonium dihydrogenphosphate, monoammonium phosphate, monopotasium phosphate, monosodium phosphate, potassium dihydrogenphosphate, dipotassium hydrogenphosphate, calcium phosphate, ammonium sodium hydrogenphosphate, magnesium hydrogenphosphate, magnesium phosphate, ferrous phosphate, ferric phosphate, sodium dihydrogenphosphate, sodium phosphate, disodium hydrogenphosphate, lead phosphate, diammonium phosphate, calcium dihydrogenphosphate, lithium phosphate, phosphotungstic acid, ammonium phosphotungstate, sodium phosphotungstate, ammonium phosphomolybdate, sodium phosphomolybdate, sodium phosphite, sodium tripolyphosphate, sodium pyrophosphate and the like. Of these compounds, sodium dihydrogenphosphate, disodium hydrogenphosphate, potassium dihydrogenphosphate and dipotassium hydrogenphosphate are preferable.

A combination of inorganic fluorine compound and phosphate compound is not particularly limited, but such aqueous solution preferably contains at least sodium fluorozirconate as an inorganic fluorine compound and at least sodium dihydogenphosphate as a phosphate compound.

The concentration of the phosphate compound in the aqueous solution is 0.01 % by weight or more in terms of the improvement of developing ability on a machine and stain resistance. Moreover, it is preferably not more than 20 % by weight, more preferably not more than 5 % by weight, in terms of the solubility.

The ratio of each compound in the aqueous solution is not particularly limited, but the mass ratio of the inorganic fluorine compound and the phosphate compound is preferably from 1/200 to 10/1, more preferably from 1/30 to 2/1.

Moreover, the temperature of the aqueous solution is preferably 20°C or more, more preferably 40 °C or more, and it is preferably not more than 100°C, more preferably not more than 80°C.

In addition, the pH of the aqueous solution is preferably pH 1 or more, more preferably pH 2 or more, and it is preferably not more than pH 11, more preferably not more than pH 5.

The method of the sealing treatment with inorganic fluorine compounds is not particularly limited, and includes, for example, dipping method, spray method and the like. These methods can be used one or multiple times separately, or two or more methods may also combined to use.

Of these methods, dipping method is preferable. When treated using dipping method, the treatment time is preferably 1 second or more, more preferably 3 seconds or more, and it is preferably not more than 100 seconds, more preferably not more than 20 seconds.

### (Sealing treatment with steam)

The method of sealing treatment with steam includes, for example, the method wherein pressurized or atmospheric steam is continuously or discontinuously contacted with the anodized film.

The temperature of steam is preferably 80°C or more, more preferably 95 °C or more, and it is preferably not more than 105°C.

The pressure of steam is preferably within the range of (atmospheric pressure - 50 mmAq) to (atmospheric pressure + 300 mmAq) (from 1.008 × 10⁵ to 1.043 × 10⁵ Pa).

Moreover, the time of contacting the anodized film with steam is preferably 1 second or more, more preferably 3 seconds or more, and it is preferably not more than 100 seconds, more preferably not more than 20 seconds.

### (Sealing treatment with hot water)

The method of sealing treatment with hot water includes, for example, the method wherein the aluminum plate which anodized film has been formed on it is dipped in hot water.

Hot water may comprise inorganic salts (for example, phosphates) or organic salts.

The temperature of hot water is preferably 80 °C or more, more preferably 95 °C or more, and it is preferably not more than 100 °C.

Moreover, the time of dipping in hot water is preferably 1 second or more, more preferably 3 seconds or more, and it is preferably not more than 100 seconds, more preferably not more than 20 seconds.

The treatment of giving hydrophilicity to the surface used for the present invention includes an alkaline metal silicate method as described in each specification of U.S. Patent Nos. 2,714,066, 3,181,461, 3,280,734 and 3,902,734. In this method, the substrate is treated by dipping in an aqueous solution containing sodium silicate, etc., or is treated by electrolysis. Besides, such method includes the method of treating with potassium fluorozirconate described in J.P. KOKOKU No. Sho 36-22063, the method of treating with polyvinylphosphonic acid as described in each specification of U.S. Patent Nos. 3,276,868, 4,153,461 and 4,689,272 and the like.

For the substrate in the present invention, its center line average roughness is preferably from 0.10 to 1.2 µm. Within this range, good adhesion with the image recording layer, good printing durability and good stain resistance may be obtained.

### (2-1-2) Th step of ejecting the ink composition onto said hydrophilic substrate

When the ink composition of the present invention is ejected onto the above hydrophilic substrate, it is preferable that the ink composition is heated to 40 - 80°C, more preferably 25 - 30 °C to lower the viscosity of the ink composition to 7 - 30 mPa.s, more preferably 7 - 20 mPa.s, followed by ejecting it. Particularly, using an ink composition whose ink viscosity is from 35 to 500 mPa.s at 25 °C, high effect can be obtained. Higher ejecting-stability may be realized by using such method. In a radiation curing-type ink composition such as the ink of this invention, the variation width of its viscosity due to temperature variation during printing is wide because the viscosity is generally higher than that of an aqueous ink used in the common ink composition for inkjet recording. This viscosity variation of the ink may largely affect droplet size and droplet ejecting rate, thereby may cause the deterioration of image quality. Consequently, the temperature of the ink during printing is needed to keep constantly as much as possible. The controlled width of the temperature of the ink composition, therefore, is preferably the setting temperature ± 5°C, more preferably the setting temperature ± 2°C, and further more preferably the setting temperature ± 1°C.

### (2-1-3) The step of irradiating radiant ray onto the hydrophilic substrate ejected by an ink to cure said ink

The above ink ejected on the surface of the hydrophilic substrate is cured by irradiating radiant ray. This is because the sensitizing dye in the polymerization initiation system contained in the above ink composition of the present invention absorbs the radiant ray to be exited state, and it contacts with the polymerization initiator in the polymerization initiation system to decompose the polymerization initiator, and then the polymerizable compound is radically polymerized to cure.

The radiant rays that may be used herein include α-ray, γ-ray, electron-ray, X-ray, ultraviolet-ray, visible ray, infrared ray and the like. The peak wavelength of the radiant rays is properly, for example, from 200 to 60 nm, preferably from 300 to 450 nm, more preferably from 350 to 450 nm depending on the absorption property of the sensitizing dye. Moreover, the polymerization initiation system may have sufficient sensitivity by even radiant rays with lower output. The output of radiant rays is properly, for example, from 10 to 2000 mJ/cm², preferably from 20 to 1000 mJ/cm², more preferably from 50 to 800 mJ/cm² of the irradiation energy. Moreover, it is proper that the radiant rays are irradiated with the illuminance of exposed surfaces of 10 to 2000 mW/cm², preferably 20 to 1000 mW/cm².

It is proper that the ink composition of the present invention is irradiated by such radiant rays, for example, for 0.01 to 120 seconds, preferably for 0.1 to 90 seconds.

The irradiation condition of radiant ray and a basic irradiation method is disclosed in J.P. KOKAI No. Sho 60-132767. Specifically, the light sources are installed on both sides of the head unit comprising ejecting device of ink, and the irradiation is carried out by scanning the head and the light sources in a so-called shuttle method. After the impact of ink on a substrate, the irradiation will be conducted in a certain time (for example, from 0.01 to 0.5 seconds, preferably from 0.01 to 0.3 seconds, more preferably from 0.01 to 0.15 seconds). It is possible to prevent the adhered ink on a substrate from blotting by conducting the irradiation of radiant rays within extremely short time after the ink adhered on a substrate. Moreover, remaining of unreacted monomers can be suppressed because it is possible to expose the ink even against porous recording medium before the ink infiltrates in a deep region where the light source cannot reach, and as the result, the odor can be decreased.

In addition, curing may be completed by another light source that doesn't involve any drive. In WO99/54415, the method using optical fiber and the method wherein a collimated light source is applied to a mirror plane installed on the head unit side and UV light is irradiated to the recording part have been disclosed as irradiation method.

The dot diameter of the impacted ink can be kept constant even against various recording media with different wettabilities on their surfaces by adopting such recording method, and the image quality improves. In order to obtain color images, superimposing from the color with lower brightness sequentially is preferable. The irradiated rays come to reach easily to the bottom ink by superimposing from the ink with lower brightness sequentially, and then excellent curing sensitivity, decrease of remaining monomers, decrease of odor and increase of adhesion can be expected. Moreover, it is possible to eject and expose all colors together, but exposing every one color is preferable in the viewpoint of curing promotion.

In this way, the ink composition of the present invention is cured by irradiation of radiant ray to form a hydrophobic image on said hydrophilic substrate surface.

### (2-2) Inkjet recording device

There is especially no limitation for an inkjet recording device used for this invention, and a commercially available inkjet recording device can be used. That is, in the present invention, it is possible to record to a recording medium using a commercially available inkjet recording device.

The inkjet recording device of the present invention comprises, for example, an ink supply system, a temperature sensor and a radiation source.

The ink supply system consists of, for example, a source tank containing the above ink composition of the present invention, a feeder line, an ink supply tank immediately before an inkjet head, a filter and a piezo-type inkjet head. The piezo-type inkjet head may be driven so as to eject multi size dots of 1 to 100 pl, preferably 8 to 30 pl by the resolution of, for example, 320 x 320 to 4000 x 4000 dpi, preferably 400 x 400 to 1600 x 1600 dpi, more preferably 720 x 720 dpi. As used herein, the term "dpi" refers to the number of dots per 2.54 cm.

As described above, for a radiation-curing type ink, it is desired that the ink to be ejected is kept in a constant temperature, so insulation and warming may be applied from the ink supply tank to the inkjet head part. The temperature control method is not especially limited, and for example, it is preferable that multiple temperature sensors are installed at each piping part to provide heating control according to the ink flow rate and the environmental temperature. The temperature sensors may be provided in the vicinity of the ink supply tank and the nozzle of the inkjet head, respectively. Moreover, the head unit heated is preferably isolated thermally or insulated so that the device body may not be affected by the temperature of outside air. In order to shorten printer start-up time, or in order to reduce thermal energy loss, it is preferable that the head unit is isolated from other parts and that the thermal capacity of the entire heating unit is lessened.

Mercury lamp, gas or solid laser and the like have been primarily used as a radiation source, and for ultraviolet-curing type inkjet, mercury lamp and metal halide lamp have been widely known. However, mercury-free has been now highly desired from the viewpoint of the protection of environment, and the replacement to GaN based semiconductor ultraviolet luminescence device is very useful for the industry and environment. Further, LED (UV-LED) and LD (UV-LD) are compact, long-lived, highly efficient and less in cost, which have been expected as light source for photocurable inkjet.

Moreover, it is possible to use a light emitting diode (LED) and a laser diode (LD) as a radiation source. Particularly, when a ultraviolet source is required, ultraviolet LED and ultraviolet LD may be used. For example, Nichia Chemistry Co. Ltd. puts a violet LED whose major emission spectrum has a wavelength between 365 nm and 420 nm on the market. When much shorter wavelength is required, U.S. Patent No. 6,084,250 discloses LED which can emission a radiation centered between 300 nm and 370 nm. Moreover, another ultraviolet LED is available, which can irradiate a radiation in different ultraviolet band. Particularly preferred radiation source is UV-LED, specifically preferably UV-LED which has a peak wavelength between 350 nm and 420 nm.

### EXAMPLE

### [Example 1]

### (Preparation of Pigment Dispersion)

Each pigment dispersion 1 of yellow, magenta, cyan and black was prepared according to the following method. A dispersion condition was appropriately adjusted with a well-known dispersion device so that the average particle size of each pigment particle ranged 0.2 to 0.3 µm, and then filtration under heating was performed to prepare the pigment dispersions.

### (Yellow Pigment Dispersion 1)

| | |
|---|---|
| C.I. Pigment Yellow 12 | 10 parts by weight |
| Polymer Dispersant (Solsperse series made by Zeneca Company) | 5 parts by weight |
| OXT-221 (Oxetane compound made by Toagosei Co. Ltd.) | 85 parts by weight |

### (Magenta Pigment Dispersion 1)

| | |
|---|---|
| C.I. Pigment Red 57:1 | 15 parts by weight |
| Polymer Dispersant (Solsperse series made by Zeneca Company) | 5 parts by weight |
| OXT-221 (Oxetane compound made by Toagosei Co. Ltd.) | 80 parts by weight |

### (Cyan Pigment Dispersion 1)

| | |
|---|---|
| C.I. Pigment Blue 15:3 | 20 parts by weight |
| Polymer Dispersant (Solsperse series made by Zeneca Company) | 5 parts by weight |
| OXT-221 (Oxetane compound made by Toagosei Co. Ltd.) | 75 parts by weight |

### (Black Pigment Dispersion 1)

| | |
|---|---|
| C.I. Pigment Black 7 | 20 parts by weight |
| Polymer Dispersant (Solsperse series made by Zeneca Company) | 5 parts by weight |
| OXT-221 | |
| (Oxetane compound made by Toagosei Co. Ltd.) | 75 parts by weight |

### (Preparation of Ink)

Each color ink was prepared by using each pigment dispersion 1 above-mentioned according to the following method.

### (Yellow Ink 1)

(a) Cationically polymerizable compound

| | |
|---|---|
| SELLOXIDE 2021 (Epoxy compound: Daicel UCB Co. Ltd.) | 35 g |
| OXT-221 (Oxetane compound: Toagosei Co. Ltd.) | 55 g |

(b) Photo-generating agent

| | |
|---|---|
| Initiator 1 | 5 g |

(c) Colorant (said Pigment Dispersion)

| | |
|---|---|
| Yellow Pigment Dispesion1 | 5 g |
| (d) Plasticizer (the invention compound, di-2-ethylhexyl phthalate) | 0.5 g |

### (Magenta Ink 1)

(a) Cationically polymerizable compound

| | |
|---|---|
| SELLOXIDE 2021 (Epoxy compound: Daicel UCB Co. Ltd.) | 35 g |
| OXT-221 (Oxetane compound: Toagosei Co. Ltd.) | 55 g |

(b) Photo-generating agent

| | |
|---|---|
| Initiator 1 | 5 g |

(c) Colorant (said Pigment Dispersion)

| | |
|---|---|
| Magenta Pigment Dispesion1 | 5 g |
| (d) Plasticizer (the invention compound, di-2-ethylhexyl phthalate) | 0.5 g |

### (Cyan Ink 1)

(a) Cationically polymerizable compound

| | |
|---|---|
| SELLOXIDE 2021 (Epoxy compound: Daicel UCB Co. Ltd.) | 35 g |
| OXT-221 (Oxetane compound: Toagosei Co. Ltd.) | 55 g |

(b) Photo-generating agent

| | |
|---|---|
| Initiator 1 | 5 g |

(c) Colorant (said Pigment Dispersion)

| | |
|---|---|
| Cyan Pigment Dispesion1 | 5 g |
| (d) Plasticizer (the invention compound, di-2-ethylhexyl phthalate) | 0.5 g |

### (Black Ink 1)

(a) Cationically polymerizable compound

| | |
|---|---|
| SELLOXIDE 2021 (Epoxy compound: Daicel UCB Co. Ltd.) | 35 g |
| OXT-221 (Oxetane compound: Toagosei Co. Ltd.) | 55 g |

(b) Photo-generating agent

| | |
|---|---|
| Initiator 1 | 5 g |

(c) Colorant (said Pigment Dispersion)

| | |
|---|---|
| Black Pigment Dispesion1 | 5 g |
| (d) Plasticizer (the invention compound, di-2-ethylhexyl phthalate) | 0.5 g |

### (Inkjet Image Recording) (Evaluation of multiple color image)

Next, recording onto a recording medium using a commercially available inkjet recording device having a piezo-type inkjet nozzle was carried out. The ink supply system consisted of a source tank, a feeder line, an ink supply tank immediately before an inkjet head, a filter and a piezo-type inkjet head, and insulation and warming were applied from the ink supply tank to the inkjet head part. Temperature sensors were provided in the vicinity of the ink supply tank and the nozzle of the inkjet head, respectively, and then temperature was controlled so that the nozzle part might always become 70 °C ± 2 °C. The piezo-type inkjet head was driven so that allowed it to eject multi size dots of 8 to 30 pl by the resolution of 720 x 720 dpi. After the impact, UV light was condensed at 100 mW/cm² of the exposed surface illuminance, and exposure system, main scanning speed and ejecting frequency were adjusted so that irradiation might start 0.1 seconds after the ink had impacted onto the recording medium. Moreover, the exposure time was variable, and the exposure energy was irradiated. As used herein, the term "dpi" refers to the number of dots per 2.54 cm.

Each ink prepared as described above was used to eject in the order of black, cyan, magenta and yellow at 25°C of environmental temperature, and then ultraviolet light was irradiated every one color. The exposing was performed by an energy curing the ink completely, wherein the total exposure energy was uniformly 300mJ/cm², so that the ink lost its cohesiveness on palpation. Each color image was recorded onto a recording medium including a sand dressed aluminum substrate, a transparent biaxial oriented polypropylene film which the surface treatment to give printing aptitude had been applied, a soft vinyl chloride sheet, a casting coated paper and a commercially available regenerated paper, and then in any case, a high resolution image without dot blotting was obtained. Moreover, in the case of a high quality paper, ink didn't permeate through to the back of paper, ink was cured sufficiently, and there was little odor due to unreacted monomers. Further, the ink recorded on the film has adequate flexibility, cracks was not formed in the ink even by bending the film, and any problem was not in the adhesion test by Cellophane (registered trademark) adhesive tape peeling.

### (Examples 2 to 5)

### (Preparation of Ink)

Magenta ink 2 to 6 were prepared according to the following method.

### (Magenta Ink 2)

(a) Cationically polymerizable compound

| | |
|---|---|
| SELLOXIDE 2021 (Epoxy compound: Daicel UCB Co. Ltd.) | 35 g |
| OXT-221 (Oxetane compound: Toagosei Co. Ltd.) | 55 g |

(b) Photo-generating agent

| | |
|---|---|
| Initiator 1 | 5 g |

(c) Colorant (said Pigment Dispersion)

| | |
|---|---|
| Magenta Pigment Dispesion1 | 5 g |

(d) Plasticizer (the invention compound, di-butyl phthalate) 0.5 g

### (Magenta Ink 3)

(a) Cationically polymerizable compound

| | |
|---|---|
| SELLOXIDE 2021 (Epoxy compound: Daicel UCB Co. Ltd.) | 35 g |
| OXT-221 (Oxetane compound: Toagosei Co. Ltd.) | 55 g |

(b) Photo-generating agent

| | |
|---|---|
| Initiator 1 | 5 g |

(c) Colorant (said Pigment Dispersion)

| | |
|---|---|
| Magenta Pigment Dispesion1 | 5 g |
| (d) Plasticizer (the invention compound, tricyclohexyl phosphate) | 0.5 g |

### (Magenta Ink 4)

(a) Cationically polymerizable compound

| | |
|---|---|
| SELLOXIDE 2021 (Epoxy compound: Daicel UCB Co. Ltd.) | 35 g |
| OXT-221 (Oxetane compound: Toagosei Co. Ltd.) | 55 g |

(b) Photo-generating agent

| | |
|---|---|
| Initiator 1 | 5 g |

(c) Colorant (said Pigment Dispersion)

| | |
|---|---|
| Magenta Pigment Dispesion1 | 5 g |
| (d) Plasticizer (the invention compound, dihexyl phthalate) | 0.5 g |

### (Magenta Ink 5)

(a) Cationically polymerizable compound

| | |
|---|---|
| SELLOXIDE 2021 (Epoxy compound: Daicel UCB Co. Ltd.) | 35 g |
| OXT-221 (Oxetane compound: Toagosei Co. Ltd.) | 55 g |

(b) Photo-generating agent

| | |
|---|---|
| Initiator 1 | 5 g |

(c) Colorant (said Pigment Dispersion)

| | |
|---|---|
| Magenta Pigment Dispesion1 | 5 g |
| (d) Plasticizer (the invention compound, dioctyl adipate) | 0.5 g |

### (Magenta Ink 6, comparative example)

(a) Cationically polymerizable compound

| | |
|---|---|
| SELLOXIDE 2021 (Epoxy compound: Daicel UCB Co. Ltd.) | 35 g |
| OXT-221 (Oxetane compound: Toagosei Co. Ltd.) | 55 g |

(b) Photo-generating agent

| | |
|---|---|
| Initiator 1 | 5 g |

(c) Colorant (said Pigment Dispersion)

| | |
|---|---|
| Magenta Pigment Dispesion1 | 5 g |

In the ink composition prepared by the above-mentioned examples and the comparative example, the viscosity of ink at the ejecting temperature was within the range of 7 to 20 mPa.s.

### (Inkjet image recording) (Evaluation of a single color image)

The Magenta Inks 2 to 5 prepared as described above and Magenta Ink 1 prepared in Example 1 were used to perform the magenta image printing in the same way as Example 1.

### (Evaluation of inkjet image)

Then, for each image formed , the sensitivity needed to cure, the permeability on a commercially available regenerated paper, the ink blots, adhesion, printing durability and of storage stability on a sand dressed aluminum substrate were evaluated according to the following method.

### 2. Measurement of curing sensitivity

The exposure energy quantum (mJ/cm²) when adhesion was lost on the image surface after ultraviolet irradiation was defined as curing sensitivity. The smaller the value is, the higher sensitive it represents.

### 3. Evaluation of storage stability

After the prepared ink was stored at 75 % RH and 60 °C for three days, the ink viscosity at the ejecting temperature was measured, and then the increment of the ink viscosity was represented by a viscosity ratio of post-storage / pre- storage. The ratio is near 1.0 where the viscosity does not change is excellent in the storage stability, while being greater than 1.5 is not preferable because clogging may be occurred during ejecting.

### 4. Evaluation of the permeability on a commercially available regenerated paper

The permeability of the printed image onto a commercially available regenerated paper was evaluated according to the following standard.
○ : There is no permeation as well as no remaining monomer odor.
Δ : The ink permeates slightly as well as remaining monomer odor is slightly observed.
× : The ink permeates through to the back side as well as remaining monomer odor is strong.

### 5. Evaluation of ink blot on a sand dressed aluminum substrate

The image printed on the aluminum substrate that had sand dressed was evaluated according to the following standard.
○ : There is no blot between the adjoining dots.
Δ : The dot blots slightly.
× : The dot blots, and the image grows dim obviously.

### 6. Evaluation of adhesion on a sand dressed aluminum substrate

For the printed images made as above-mentioned, the samples whose printed surfaces were not damaged at all, and the samples whose printed surfaces were made 11 cuts longitudinally and latitudinally at intervals of 1 mm to produce 100 go board eyes of 1 mm square in accordance with JISK 5400 were prepared. Then, putting Cellophane (registered trademark) adhesive tape on each printed surface, peeling it off quickly at the angle of 90 degrees, and the situations of the printed image that remained without being peeled off and the go board eyes were evaluated in accordance with the following standard.
○ : No peeling of the printed image is recognized at all in even the go board eye test.
Δ : Some ink peeling is recognized in the go board eye test, but peeling is hardly recognized if the ink surface is not damaged.
× : Peeling by Cellophane (registered trademark) adhesive tape is easily recognized in both conditions.

### (Evaluation as a lithographic plate)

The ink composition of the present invention was printed onto the sand dressed aluminum substrate prepared as described above to form an image on it. This was evaluated as a lithographic plate.

### (a) Evaluation of the image

The lithographic plate prepared by the ink composition of the present invention was applied to Hydel KOR-D machine, and ink (VALUES-G Red made by Dainippon Ink Co. Ltd. an ink for sheet-fed press,) and wetting water (Ecolity 2 made by Fuji Photo Film Co. Ltd.) were supplied to carry out printing. The printed matter after 100 pieces of substrate had printed was evaluated by visual observation in accordance with the following standard.
○ : An image without any missing of image part and any stain of non-image part was obtained.
Δ : Slight missing of image part and / or slight stain of non-image part were observed.
× : Some missing of image part and / or some stain of non-image part were observed, and their level was problematic for practical use.

### (b) Evaluation of printing property

The printing continued as it was, and then the number of prints was compared relatively as an index of printing property (that of the comparative example was equal to 100). The greater the value is, the higher printing durability it represents, being preferable.

These evaluation results are shown in Table 2.

**Table 2**

| | Ex. 2 | Ex. 3 | Ex. 4 | Ex. 5 | Comp. Ex. |
|---|---|---|---|---|---|
| Magenta Ink Number | 2 | 3 | 4 | 5 | 6 |
| Permeation into regenerated paper | ○ | ○ | ○ | ○ | Δ |
| Blot on aluminum substrate | ○ | ○ | ○ | ○ | Δ |
| Adhesion on aluminum substrate | ○ | ○ | ○ | ○ | Δ |
| Curing sensitivity (mJ/cm²) | 150 | 150 | 140 | 150 | 150 |
| Ink storage stability | 1.2 | 1.3 | 1.3 | 1.3 | 1.3 |
| Image evaluation of lithographic plate | ○ | ○ | ○ | ○ | Δ |
| Printing durability | 110 | 120 | 110 | 120 | 100 |

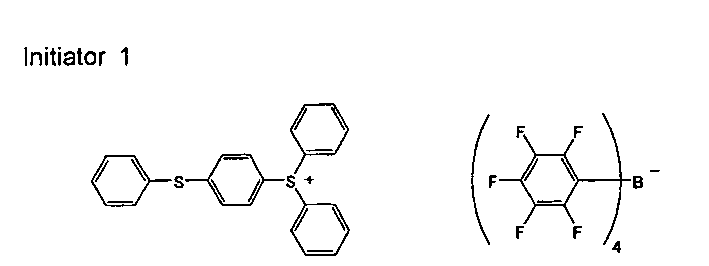

As is obvious from the results of Example 2 to 5 in the above Table 2, when the ink composition of the present invention was used, any permeation into a commercially available regenerated paper was not shown, any blot on an aluminum substrate was not observed, and particularly the adhesion was excellent. Moreover, both the curing sensitivity and ink storage stability of the ink composition of the present invention are high. Further, the image of the lithographic plate using the ink composition of the present invention was excellent, where high printing durability was found.

On the other hand, the ink composition containing no plasticizer (Comparative example) was permeated into a commercially available regenerated paper. Moreover, in this case, the blot on an aluminum substrate was observed as well as the result of the adhesion was low. Further, the printing durability of the lithographic plate formed by the ink composition was lower than that of the present invention.

### INDUSTRIAL APPLICABILITY

The present invention is an ink composition with good storage stability, which can form an image having high sensitivity, good adhesion and high quality. The ink composition of the present invention can be used as an ink composition for use in inkjet recording. Moreover, according to the present invention, an inkjet recording method which may provide a high quality print and a printed matter are provided.

In addition, the present invention provides a lithographic plate which doesn't require a developing process, has a high printing durability and can form a high quality image as well as a method for making such plate.

## Claims

1. An ink composition comprising (a) a cationically-polymerizable compound; (b) a compound which generates an acid upon irradiation; and (c) a plasticizer which is at least one compound selected from a phosphate ester, a dicarboxylic acid ester and a tricarboxylic acid ester; wherein the mass ratio of (b) to (c) is 20:1-1:5; the phosphate ester is represented by the following formula (1) : 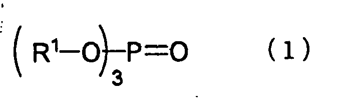 wherein each R¹ independently represents an alkyl group, a cycloalkyl group, an alkenyl group or an aryl group, each of which may be substituted with a halogen atom, a hydroxyl group, a C₁-C₄₀ alkoxy group, a cyano group, a aryloxy group, a C₁-C₄₀ alkyl group, a C₁-C₄₀ alkenyl group, a C₂-C₄₂ alkoxycarbonyl group or a group represented by the formula (R²O)₃PO-O-, wherein each R² independently represents an alkyl group, a cycloalkyl group, an alkenyl group or an aryl group, each of which may be substituted with a halogen atom, a hydroxyl group, an alkoxy group, a cyano group, an aryloxy group, an alkyl group, an akenyl group or an alkoxycarbonyl group;
the dicarboxylic acid ester is represented by the following formula (2):
R³OOC-L¹-COOR⁴ (2)
wherein L¹ represents a divalent substituted or unsubstituted aliphatic hydrocarbon group, a divalent substituted or unsubstituted alicyclic hydrocarbon group, or a divalent substituted or unsubstituted aromatic hydrocarbon group, and R³ and R⁴ each independently represents a substituted or unsubstituted aliphatic hydrocarbon group, a substituted or unsubstituted alicyclic hydrocarbon group, or a substituted or unsubstitutd aromatic hydrocarbon group; and
the tricarboxylic acid ester is represented by the following formula (3): 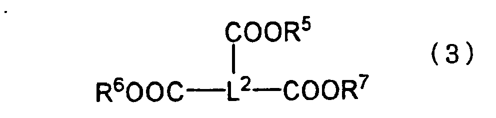 wherein L² represents a trivalent substituted or unsubstituted aliphatic hydrocarbon group, a trivalent substituted or unsubstituted alicyclic hydrocarbon group, or a trivalent substituted or unsubstituted aromatic hydrocarbon group, and R⁵, R⁶, and R⁷ each independently represents a substituted or unsubstituted aliphatic hydrocarbon group, a substituted or unsubstituted alicyclic hydrocarbon group, or a substituted or unsubstituted aromatic hydrocarbon group.

2. An ink composition according to Claim 1, further comprising (d) a colorant.

3. An ink composition according to Claim 2, wherein the colorant (d) is a pigment or an oil-soluble dye.

4. Use of an ink composition according to any preceding Claim in inkjet recording.

5. A method for inkjet recording comprising ejecting an ink composition according to any of Claims 1-3 onto a recording medium and irradiating the ink composition to cure it.

6. A printed material obtainable by ejecting an ink composition according to any of Claims 1-3 onto a printing medium and irradiating the ink composition to cure it.

7. A method for producing a lithographic printing plate comprising ejecting an ink composition according to any of Claims 1-3 onto a hydrophilic substrate and irradiating the ink composition to cure it and form a hydrophobic area on the substrate.

8. A lithographic printing plate comprising a hydrophobic area obtainable by ejecting an ink composition according to any of Claims 1-3 onto a hydrophilic substrate and irradiating the ink composition to cure it.

## Patentansprüche

1. Tintenzusammensetzung, umfassend (a) eine kationisch polymerisierbare Verbindung, (b) eine Verbindung, die bei Bestrahlung eine Säure bildet und (c) einen Weichmacher, der zumindest eine Verbindung ist ausgewählt aus Phosphatestern, Dicarbonsäureestern und Tricarbonsäureestern, worin das Gewichtsverhältnis von (b) zu (c) 20:1-1:5 beträgt, die Phosphatester durch die folgende Formel (1) dargestellt werden: 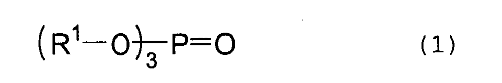 worin jedes R¹ unabhängig eine Alkylgruppe, eine Cycloalkylgruppe, eine Alkenylgruppe oder eine Arylgruppe darstellt, von denen jede mit einem Halogenatom, einer Hydroxylgruppe, einer C₁-C₄₀-Alkoxygruppe, einer Cyanogruppe, einer C₆-C₁₀-Aryloxygruppe, einer C₁-C₄₀-Alkylgruppe, einer C₁-C₄₀-Alkenylgruppe, einer C₂-C₄₂-Alkoxycarbonylgruppe oder einer durch die Formel (R²O)₃PO-O- dargestellten Gruppe substituiert sein kann, worin jedes R² unabhängig eine Alkylgruppe, eine Cycloalkylgruppe, eine Alkenylgruppe oder eine Arylgruppe darstellt, von denen jede mit einem Halogenatom, einer Hydroxylgruppe, einer Alkoxygruppe, einer Cyanogruppe, einer Aryloxygruppe, einer Alkylgruppe, einer Alkenylgruppe oder einer Alkoxycarbonylgruppe substituiert sein kann;
die Dicarbonsäureester durch die folgende Formel (2) dargestellt werden:
R³OOC -L¹-COOR⁴ (2)
worin L¹ eine divalente substituierte oder unsubstituierte aliphatische Kohlenwasserstoffgruppe, eine divalente substituierte oder unsubstituierte alicyclische Kohlenwasserstoffgruppe oder eine divalente substituierte oder unsubstituierte aromatische Kohlenwasserstoffgruppe darstellt, und R³ und R⁴ jeweils unabhängig eine substituierte oder unsubstituierte aliphatische Kohlenwasserstoffgruppe, eine substituierte oder unsubstituierte alicyclische Kohlenwasserstoffgruppe oder eine substituierte oder unsubstituierte aromatische Kohlenwasserstoffgruppe darstellen; und
die Tricarbonsäureester durch die folgende Formel (3) dargestellt werden: 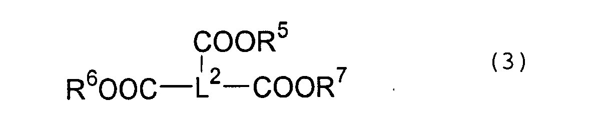 worin L² eine trivalente substituierte oder unsubstituierte aliphatische Kohlenwasserstoffgruppe, eine trivalente substituierte oder unsubstituierte alicyclische Kohlenwasserstoffgruppe oder eine trivalente substituierte oder unsubstituierte aromatische Kohlenwasserstoffgruppe darstellt, und R⁵, R⁶ und R⁷ jeweils unabhängig eine substituierte oder unsubstituierte aliphatische Kohlenwasserstoffgruppe, eine substituierte oder unsubstituierte alicyclische Kohlenwasserstoffgruppe oder eine substituierte oder unsubstituierte aromatische Kohlenwasserstoffgruppe darstellen.

2. Tintenzusammensetzung gemäß Anspruch 1, ferner umfassend (d) ein Färbemittel.

3. Tintenzusammensetzung gemäß Anspruch 2, worin das Färbemittel (d) ein Pigment oder ein öllöslicher Farbstoff ist.

4. Verwendung einer Tintenzusammensetzung gemäß irgendeinem vorhergehenden Anspruch bei der Tintenstrahlaufzeichnung.

5. Verfahren zur Tintenstrahlaufzeichnung, umfassend das Ausstoßen einer Tintenzusammensetzung gemäß irgendeinem der Ansprüche 1 bis 3 auf ein Aufzeichnungsmedium und Bestrahlen der Tintenzusammensetzung, um sie zu härten.

6. Drucksache bzw. bedrucktes Material, erhältlich durch Ausstoßen einer Tintenzusammensetzung gemäß irgendeinem der Ansprüche 1 bis 3 auf ein Druckmedium und Bestrahlen der Tintenzusammensetzung, um sie zu härten.

7. Verfahren zur Herstellung einer Lithographie-Druckplatte, umfassend das Ausstoßen einer Tintenzusammensetzung gemäß irgendeinem der Ansprüche 1 bis 3 auf ein hydrophiles Substrat und Bestrahlen der Tintenzusammensetzung, um sie zu härten und einen hydrophoben Bereich auf dem Substrat zu bilden.

8. Lithographie-Druckplatte, umfassend einen hydrophoben Bereich, der erhältlich ist durch Ausstoßen einer Tintenzusammensetzung gemäß irgendeinem der Ansprüche 1 bis 3 auf ein hydrophiles Substrat und Bestrahlen der Tintenzusammensetzung, um sie zu härten.

## Revendications

1. Composition d'encre comprenant (a) un composé polymérisable de manière cationique ; (b) un composé qui génère un acide par irradiation, et (c) un plastifiant, qui est au moins un composé choisi parmi un ester de phosphate, un ester d'acide dicarboxylique et un ester d'acide tricarboxylique ; le rapport massique de (b) à (c) se situant dans l'intervalle allant de 20:1 à 1:5 ; l'ester de phosphate étant représenté par la formule (1) suivante : 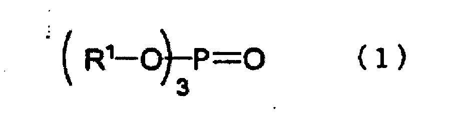 dans laquelle chaque R¹ représente indépendamment un groupe alkyle, un groupe cycloalkyle, un groupe alcényle ou un groupe aryle, chacun pouvant être substitué par un atome d'halogène, un groupe hydroxyle, un groupe alkoxy en C₁-C₄₀, un groupe cyano, un groupe aryloxy en C₆-C₁₀, un groupe alkyle en C₁-C₄₀, un groupe alcényle en C₁-C₄₀, un groupe alcoxycarbonyle en C₂-C₄₂ ou un groupe représenté par la formule (R²O)₃PO-O-, où chaque R² représente indépendamment un groupe alkyle, un groupe cycloalkyle, un groupe alcényle ou un groupe aryle, chacun pouvant être substitué par un atome d'halogène, un groupe hydroxyle, un groupe alcoxy, un groupe cyano, un groupe aryloxy, un groupe alkyle, un groupe alcényle ou un groupe alcoxycarbonyle ;
l'ester d'acide dicarboxylique est représenté par la formule (2) suivante :
**R³OOC-L¹-COOR⁴** **(2)**
dans laquelle L¹ représente un groupe hydrocarboné aliphatique bivalent substitué ou non substitué, un groupe hydrocarboné alicyclique bivalent substitué ou non substitué, ou un groupe hydrocarboné aromatique bivalent substitué ou non substitué, et R³ et R⁴ représentent chacun indépendamment, un groupe hydrocarboné aliphatique substitué ou non substitué, un groupe hydrocarboné alicyclique substitué ou non substitué, ou un groupe hydrocarboné aromatique substitué ou non substitué ; et
l'ester d'acide tricarboxylique est représenté par la formule (3) suivants : 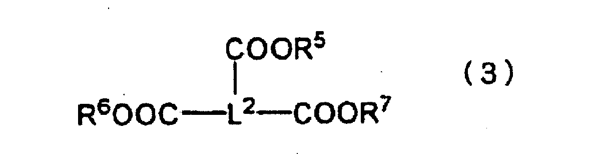 dans laquelle L² représente un groupe hydrocarboné aliphatique trivalent substitué ou non substitué, un groupe hydrocarboné alicyclique trivalent substitué ou non substitué, ou un groupe hydrocarboné aromatique trivalent substitué ou non substitué, et R⁵, R⁶ et R⁷ représentent chacun indépendamment, un groupe hydrocarboné aliphatique substitué ou non substitué, un groupe hydrocarboné alicyclique substitué ou non substitué, ou un groupe hydrocarboné aromatique substitué ou non substitué.

2. Composition d'encre selon la revendication 1, comprenant en outre, (d) un colorant.

3. Composition d'encre selon la revendication 2, où le colorant (d) est un pigment ou un colorant oléosoluble.

4. Utilisation d'une composition d'encre selon l'une quelconque des revendications précédentes, dans un enregistrement par jet d'encre.

5. Procédé d'enregistrement par jet d'encre, comprenant l'éjection d'une composition d'encre selon l'une quelconque des revendications 1 à 3 sur un milieu d'enregistrement, et l'irradiation de la composition d'encre pour la durcir.

6. Matériau imprimé pouvant être obtenu par l'éjection d'une composition d'encre selon l'une quelconque des revendications 1 à 3 sur un milieu d'impression, et l'irradiation de la composition d'encre pour la durcir.

7. Procédé de production d'une plaque d'impression lithographique, comprenant l'éjection d'une composition d'encre selon l'une quelconque des revendications 1 à 3 sur un substrat hydrophile, et l'irradiation de la composition d'encre pour la durcir et former une zone hydrophobe sur le substrat.

8. Plaque d'impression lithographique comprenant une zone hydrophobe, pouvant être obtenue par l'éjection d'une composition d'encre selon l'une quelconque des revendications 1 à 3 sur un substrat hydrophile, et l'irradiation de la composition d'encre pour la durcir.
